# EUROPEAN PATENT APPLICATION

(11) **EP 2 610 870 A2**
(43) Date of publication of application: **03.07.2013**
(21) Application number: 12008501.4
(22) Date of filing: 20.12.2012
(51) Int. Cl.: G11B 27/034, G11B 27/32, G11B 27/34

(54) **Image pickup device and control method thereof**

(30) Priority: 28.12.2011 JP 2011289563
(71) Applicant: JVC KENWOOD Corporation, Kanagawa 221-0022 (JP)
(72) Inventor: Kuchinomachi, Takeshi, Yokohama-shi, Kanagawa, 2210022 (JP); Iguchi, Kentaro, Yokohama-shi, Kanagawa, 2210022 (JP)
(74) Representative: Wagner, Karl H.

(57) **Abstract**

An image pickup device capable of processing a high-resolution image appropriately is provided. The image pickup device includes an imaging sensor for taking an image and a plurality of main processors for encoding segmented images obtained by dividing the image taken by the image sensor spatially. Encoded files are obtained by encoding the segmented images and further recorded in a plurality of memory cards corresponding to the main processors, respectively. In these main processors, a first processor creates the encoded file so as to contain a thumbnail image of the image.

## Description

### BACKGROUND

The present invention relates to an image pickup device and a control method thereof, more specifically, an image pickup device for dividing one screen into a plurality of segmented images and further recording them.

The image pickup device as typified by a digital video camera takes motion pictures of a subject and successively encodes these motion pictures by a specific encoding system, such as H.264. After the encoding, resultant encoded motion images are stored in recording media. Regarding the resolution of an image taken by the existing digital video camera, there are universally-adopted SD (Standard Definition) with a resolution of 480×640 pixels and HD (High Definition) with a higher resolution of 1920×1080 pixels.

In recent years, with the increasing demand for taking an image at a higher resolution, a device allowing shooting of an image in so-called "4K2K" format to expand a high-resolution format up to 3840×2160 pixels image format has been developed.

However, in order for a single LSI to encode such a large-capacity image, the LSI is required to have an extraordinarily high performance. Therefore, a system where a taken image is divided into a plurality of small areas and successively, resulting segmented images are processed by individual LSIs, is currently under consideration (Japanese Patent Publication Laid-open No.2010-98633).

It is noted here that when dividing a 4K2K ultrahigh-definition image and further encoding the resulting segmented images, quality deterioration is caused at segmentation boundaries of the encoded segmented images. An encoding equipment disclosed in Japanese Patent Publication Laid-open No.2010-98633 is **characterized in that** segmented-area reversing means is separately arranged to reduce the quality deterioration of the encoded images. With this constitution, the encoding equipment enables an in-screen predictive encoding of the segmented images without impairing the continuity of the segmentation boundaries.

In addition, Japanese Patent Publication Laid-open No.2011-35863 discloses an image pickup device which is configured so as to encode segmented images by a plurality of encoding units and further record encoded data in multiple recording media. The image pickup device includes an encoding-amount calculating unit for calculating an encoding amount of encoded data by each encoding unit and a recoded-encoding-amount calculating unit for calculating an encoding amount of the encoded data recorded in each recording medium. In addition, since a selecting unit is arranged between each encoding unit and each recording medium to select a recording destination of the encoded data by the plurality of encoding units on the basis of these encoding amounts, the disclosed image pickup device enables a homogenization of the encoding amounts of the encoded data recorded in the multiple recording media.

Still further, Japanese Patent Publication Laid-open No.2011-205262 discloses a data processing equipment directed to reduce a load of editing video data recorded in multiple recording media. The data processing equipment includes judging means for judging whether data in question is included in the video data recoded in the multiple recording media in segmentation and searching means for searching a part of segmented video data recorded in the other recording medium. Thus, since the data processing equipment is constructed so as to provide an image-information list representing the segmented video data recorded in the multiple recording media owing to the searching operation, it is possible to reduce a load for editing the video data recorded in the multiple recording media.

### SUMMARY

For a digital video camera equipped with a recording function of encoding video data by a plurality of processors and further recording the encoded video data in multiple recording media and a reproducing function of reproducing the video data recorded in the multiple recording media, various controls for controlling the encoding operation of the video data and the recording operation of the encoded video data are indispensable to the digital video camera.

In encoding and recording four segmented images provided by dividing an overall image, it is necessary to decode and synthesize the encoded video data in order to confirm the contents of recorded scenes. Thus, before reproducing the image, a user cannot confirm what kind of image will be reproduced.

For instance, it becomes difficult for a user to select an image file that the user wants to reproduce, from a list of scenes displayed in a display screen.

Taking the above-mentioned problem into consideration, an object of the present invention is to provide an image pickup device capable of processing a high-resolution image appropriately.

In order to achieve the above object, according to the present invention, there is provided an image pickup device comprising: imaging means configured to take an image; and a plurality of processors configured to encode segmented images obtained by dividing the image taken by the imaging means, the plurality of processor having at least a first processor, wherein the plurality of processors are configured to record encoded files obtained by encoding the segmented images, in a plurality of recording media corresponding to the plurality of processors, and the first processor is configured to create the encoded file so as to contain a thumbnail image of the image.

According to the present invention, there is also provided a method of controlling an image pickup device having imaging means configured to take an image and a plurality of processors configured to encode segmented images obtained by dividing the image taken by the imaging means, the method comprising the steps of: allowing the plurality of processors to encode the segmented images thereby creating encoded files, respectively; allowing a first processor of the plurality of processors to create a thumbnail image of the image; and allowing the first processor to create the encoded file so as to contain the thumbnail image when recording the encoded files in a plurality of recording media corresponding to the plurality of processors.

Still further, there is provided a control program for an image pickup device having imaging means configured to take an image and a plurality of processors configured to encode segmented images obtained by dividing the image taken by the imaging means, the control program allowing the processors to execute the steps of: allowing the plurality of processors to encode the segmented images thereby creating encoded files, respectively; allowing a first processor of the plurality of processors to create a thumbnail image of the image; and allowing the first processor to create the encoded file so as to contain the thumbnail image when recording the encoded files in a plurality of recording media corresponding to the plurality of processors.

### BRIEF DESCRIPTION OF THE DRAWINGS

Fig. 1 is a side view typically showing the constitution of an image pickup device in accordance with an embodiment of the present invention;
Fig. 2 is a side view showing the constitution of the image pickup device of the embodiment of the present invention;
Fig. 3 is a view showing a display screen of the image pickup device;
Fig. 4 is a block diagram showing the constitution of a control system of the image pickup device;
Fig. 5 is a block diagram showing the control system of the image pickup device functionally;
Fig. 6 is a block diagram showing the constitution of a controller of a first main processor functionally;
Fig. 7 is a view to explain directories of formatted memory cards;
Fig. 8 is a view to explain the directories where encoded files are stored;
Fig. 9 is a view to explain coded files at recording in a normal mode;
Fig. 10 is a view to explain a condition to insert another memory card into a first card slot;
Fig. 11 is a view to explain a condition to insert another memory card into a fourth card slot;
Fig. 12 is a view to explain a condition where a HD image is recorded in a first memory card;
Fig. 13 is a view to explain sequential numbers of directories created in using a plurality of memory cards;
Fig. 14 is a view to explain a condition where the numbers of files contained in the memory cards do not accord with each other;
Fig. 15 is a view to explain a condition where encoded files contained in the memory cards are inconsistent with each other;
Fig. 16 is a view to explain deleting of the encoded files;
Fig. 17 is a view to explain one example of alert displaying;
Fig. 18 is a view to explain another example of alert displaying;
Fig. 19 is a view showing an icon display in an inconsistent condition of a memory card;
Fig. 20 is a flow chart showing a control flow of a playback process;
Fig. 21 is a flow chart showing a control flow of a recording process;
Fig. 22 is a block diagram showing the constitution for changing an icon display of a memory card;
Fig. 23 is a view showing a data structure of a MP4 file typically;
Fig. 24 is a view showing the positional information typically;
Fig. 25 is a view showing a data structure of free atom typically;
Fig. 26 is a view to explain setting of a horizontal position and a vertical position;
Fig. 27 is a view to explain the positional information at recording in a nonoverlapping mode;
Fig. 28 is a view to explain the positional information of adjoining areas overlapped with each other by 16 pixels;
Fig. 29 is a view to explain the positional information at recording in a normal mode;
Fig. 30 is a view to explain the positional information when an overall image is divided into four segments in the horizontal direction;
Fig. 31 is a view to explain the positional information when an overall image is divided into sixteen segments;
Fig. 32 is a flow chart showing the creation process of a thumbnail image; and
Fig. 33 is a flow chart showing the creation process of the thumbnail image.

### DETAILED DESCRIPTION

### (Overall Constitution)

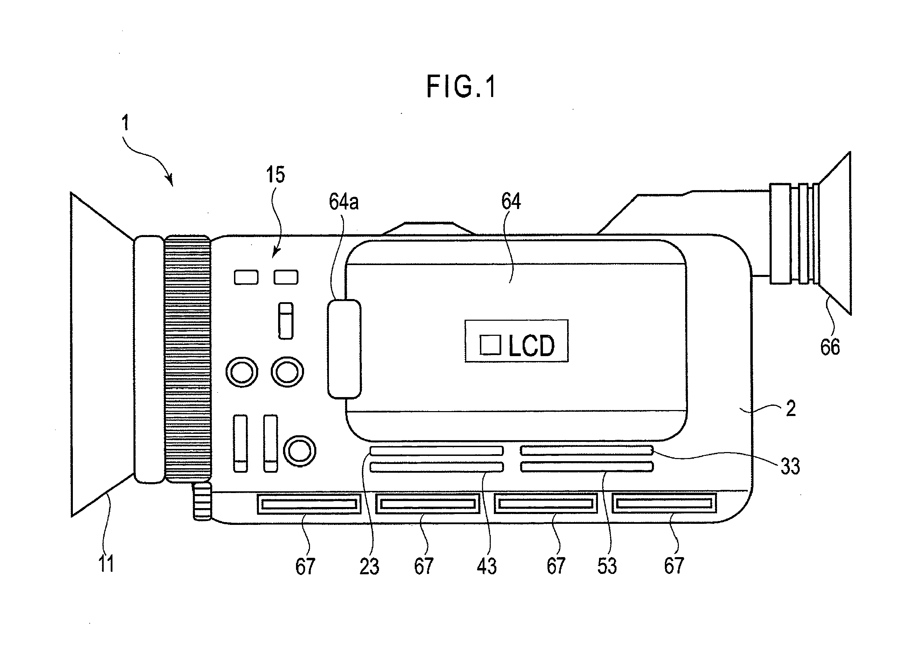

An embodiment of the present invention will be described with reference to drawings, below Fig. 1 is a side view showing the constitution of an image pickup device related to an embodiment. Fig. 1 shows a left side face of an image pickup device 1. The image pickup device 1 includes an image sensor for taking a dynamic picture image. In the following description, the terminology "image" should be regarded as representing a dynamic picture image as long as it is unmentioned particularly. In addition, the image pickup device 1 encodes segmented images obtained by dividing an image taken by the image sensor. That is, the segmented images can be obtained by dividing one frame of image spatially. The image pickup device 1 records encoded segmented images into a recording medium, such as a SD memory card. In addition, the image pickup device 1 takes a high-resolution image with a 4K2K resolution (which will be referred to as "4k image" after). Moreover, the image pickup device 1 is capable of taking an image with a HD resolution (which will be referred to as "HD image" after). Thus, the image pickup device 1 is adapted so as to enable a taking of an image in either a high-resolution mode with a 4K2K resolution or a normal mode with a HD resolution in a switchable manner.

As shown in Fig. 1, the image pickup device 1 includes a main body 2, a lens unit 11, a monitor 64 and a view fmder 66. The main body 2 includes an image sensor (imaging means), such as a CMOS sensor and a CCD sensor, a control system for various controls, a battery for supplying respective equipments with power, a casing for accommodating these components and so on. On the front side of the main body 2, the lens unit 11 is arranged to lead light from a subject to the image sensor. On the rear side of the main body 2, the view fmder 66 is arranged to allow an image taken by the image sensor to visible to a user (shooter).

The monitor 64 is attached to a side face of the main body 2 through a hinge 64a in an openable and closable manner. The monitor 64 includes a display unit, such as a liquid crystal display panel and an organic light emitting display panel. An image taken by the image pickup device 1 or a reproduced image is displayed on a display screen of the monitor 64. On the display screen of the monitor 64, additionally, there is displayed information about the image taken by the image pickup device 1 or the reproduced image. Alternatively, the monitor 64 is adapted so as to display a reproducing time of the image, its recording time, a residual power of the battery and so on. The monitor 64 further displays a list of recorded scenes so as to enable a user to select an image to be reproduced. When opening the monitor 64, the display screen is directed to the rear side of the image pickup device 1, allowing an image on the display screen to be visible to a user. The main body 2 is provided, on its side face, with an input unit 15 having manual operation buttons, levers and so on. Specifically, the input unit 15 includes a recording button, a reproducing button, a resolution selecting button, etc. A user's operating of the input unit 15 enables a recording of images, their reproducing, a variety of settings and so on. Of course, the monitor 64 may be constructed so as to serve as the input unit 16 in the form of a touch panel.

On the side face of the main body 2, there are four card slots 23, 33, 43 and 53. In this image pickup device 1, the four card slots 23, 33, 43 and 53 are positioned under the monitor 64. Various memory cards, such as SD memory cards, are inserted into these card slots 23, 33, 43 and 53, respectively. Thus, the image pickup device 1 is capable of accommodating four memory cards simultaneously. Concretely, by inserting respective memory cards into the card slots 23, 33, 43 and 53 in a vertical direction to the sheet of drawing, these memory cards can be fitted to the image pickup device 1. In this way, images taken by the image pickup device 1 can be recorded into detachable memory cards.

Of course, the memory card is not limited to only a SD memory card and therefore, the other recording medium, such as a memory stick and a "compact flash" (trade mark) card, is available for the memory card. The four memory cards consist of recording media of the same type. In the following description, these card slots 23, 33, 43 and 53 may be appropriately referred to as "first card slot 23", "second card slot 33", "third card slot 43" and "forth card slot 53", respectively for their individualization.

In connection, there is no need of equalizing the capacities of four memory cards to be used simultaneously.

In addition, below the card slots 23, 33, 43, 53 and the input unit 15, there are four HDMI terminals 67. The HDMI terminals 67 are used for connection with an exterior display unit, such as a personal computer monitor and a television. That is, by connecting HDMI cables to the HDMI terminals 67, it is possible to transmit data between the exterior display units and the image pickup device 1. The HDMI terminals 67 are compatible with 1920×1080 full-HD format.

### (Slot Arrangement)

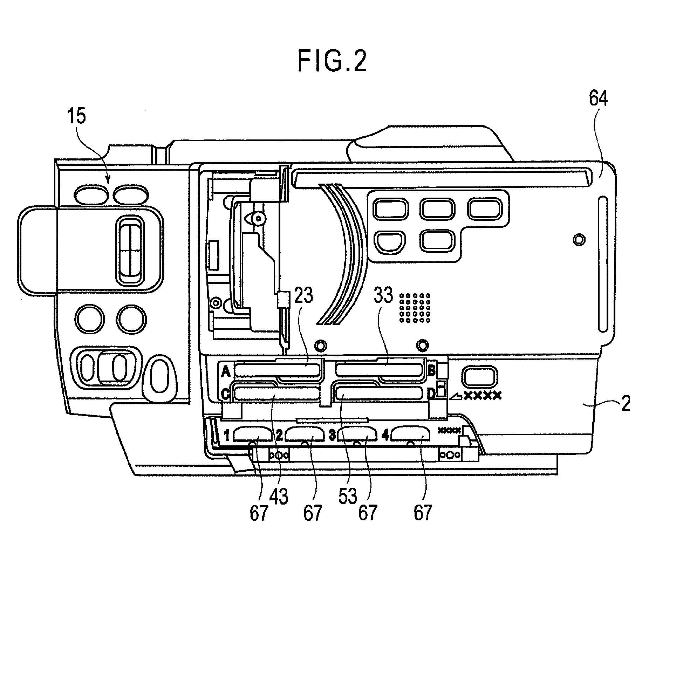

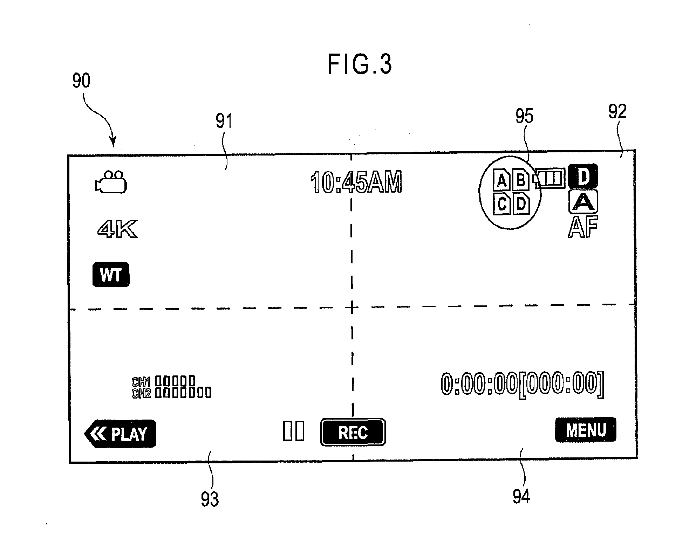

Referring to Figs. 2 and 3, the arrangement of the card slots 23, 33, 43 and 53 will be described. Fig. 2 is a side view showing the arrangement of the card slots 23, 33, 43 and 53, viewed along the inserting direction of memory cards. Fig. 3 is a view typically showing an image displayed on the monitor 64.

As shown in Fig. 2, the four card slots 23, 33, 43 and 53 are arranged in the form of a matrix of 2×2. Specifically, the first card slot 23 is positioned at the upper left, the second card slot 33 at the upper right, the third card slot 43 at the lower left, and the fourth card slot 53 is positioned at the lower right. In other words, the first card slot 23 is arranged on the left of the second card slot 33 and on the upper side of the third card slot 43. The second card slot 33 is arranged on the right of the first card slot 23 and on the upper side of the fourth card slot 53. The third card slot 43 is arranged on the lower side of the first card slot 23 and on the left of the fourth card slot 53. The fourth card slot 53 is arranged on the lower side of the second card slot 33 and on the right of the third card slot 43. Note that the direction of thickness of each memory card coincides with a vertical (upper-to-lower) direction of the sheet of drawing.

The image pickup device 1 divides an image taken (also referred to as "overall image" after) by the image sensor into four divisions for encoding. Then, the image pickup device 1 records respective encoded files as a result of encoding tetrameric segmented images into four memory cards inserted into the card slots 23, 33, 43 and 53, respectively. For instance, as shown in Fig. 3, an overall image 90 is divided into a first area 91, a second area 92, a third area 93 and a fourth area 94 for their encoding. A first encoded file as a result of encoding the first area 91 is recorded into a memory card inserted into the first card slot 23. Similarly, a second encoded file as a result of encoding the second area 92 is recorded into a memory card inserted into the second card slot 33, a third encoded file as a result of encoding the third area 93 recorded into a memory card inserted into the third card slot 43, and a fourth encoded file as a result of encoding the fourth area 94 is recorded into a memory card inserted into the fourth card slot 53.

For instance, the encoded files from image data in respective areas are encoded in the form of MP4 files. Note that if the resolution of the overall image 90 is 3840×2160 pixels (4K2K), then the resolution of each area becomes 1920×1080 pixels (HD: High Definition). Of course, the resolutions of respective areas are equal to each other in size. When recording a 4K image, it is divided spatially to record the resulting segmented images into four memory cards. In this way, it is possible to elongate the longest recording time of the encoded file that a single memory card can record. In addition, since the size of an encoded file for the same recording time can be reduced quarterly, it is possible to execute data transfer with ease. Without being limited to only MP4 format, the encoding format may be either MOV format or AVI format.

The positional relationship of the card slots 23, 33, 43 and 53 coincides with the positional relationship of the first area 91 to the fourth area 94. For instance, the encoded file in the first area 91 at the upper left in the overall image 90 is recorded into a memory card inserted into the first card slot 23 at the upper left. The encoded file in the second area 92 at the upper right in the overall image 90 is recorded into a memory card inserted into the second card slot 33 at the upper right. Similarly, the encoded file in the third area 93 at the lower left in the overall image 90 is recorded into a memory card inserted into the third card slot 43 at the lower left. The encoded file in the fourth area 94 at the lower right in the overall image 90 is recorded into a memory card inserted into the fourth card slot 53 at the lower right. In this way, the respective areas 91 to 94 on the display screen are arranged so as to respectively correspond to the card slots 23, 33, 43 and 53 in the positional relationship. With this arrangement, an operator can recognize which of data in respective areas is stored in which of the memory cards.

Further, the display screen includes a card icon display section 95 representing the fitting condition of respective memory cards into the card slots 23, 33, 43 and 53. The card icon display section 95 is arranged at the upper right in the display screen, that is, an appropriate position in the second area 92. If memory cards are inserted into the card slots 23, 33, 43 and 53 respectively, four icons A to D are all displayed in the second area 92. In arrangement, the first card slot 23 corresponds to the icon A, the second card slot 33 to the icon B, the third card slot 43 to the icon C, and the third card slot 53 corresponds to the icon D. In this way, four icons A to D are displayed in the card icon display section 95, corresponding to the first card slot 23 to the fourth card slot 53 respectively. On condition of detecting whether respective memory cards are being inserted into the first to the fourth card slots, additionally, the image pickup device 1 may be constructed so as to either blink or non-display an icon corresponding to the card slot into which no memory card is inserted. Alternatively, the image pickup device 1 may be constructed so as to blink a specified icon if the memory card inserted to the card slot corresponding to the specified icon is formatted appropriately or this memory card is not compatible with a predetermined regular card class.

### (Control System)

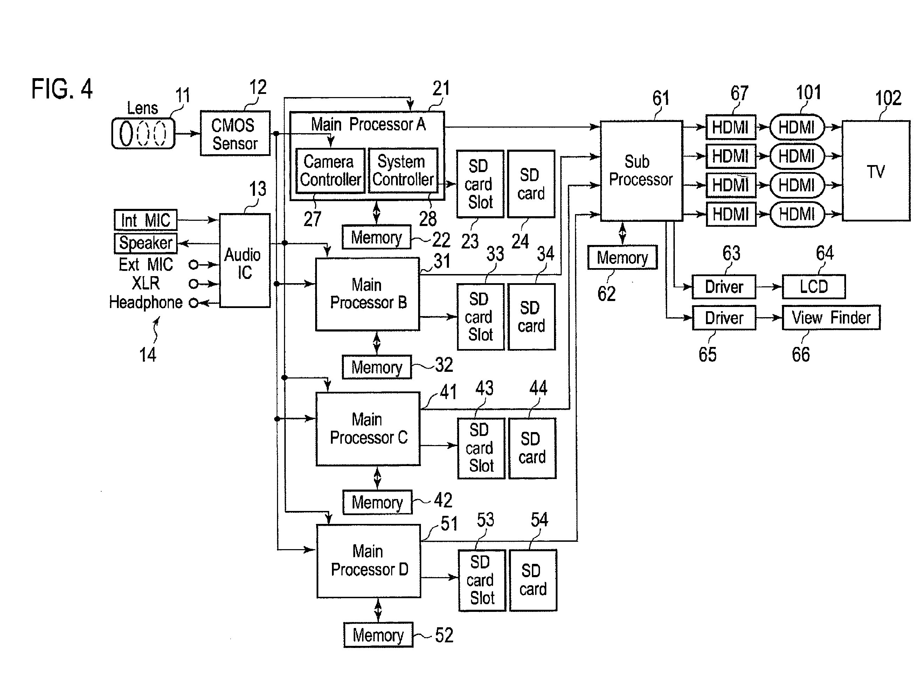

As mentioned above, the image pickup device 1 divides the overall image and encodes the divided images respectively. Then, the image pickup device 1 produces encoded files every divided images and records the encoded files into different memory cards. The control system for producing the encoded files every divided images and recording the encoded files into different memory cards will be described below. Fig. 4 is a block diagram showing the control system of the image pickup device 1 typically.

The image pickup device 1 includes an image sensor 12, an audio IC 13, an audio input/output unit 14, main processors 21, 31, 41 and 51, memories 22, 32, 42 and 52, the card slots 23, 33, 43 and 53, a sub-processor 61, a memory 62, a display driver 63, the monitor 64, a display driver 65 and the view fmder 66. As shown in Fig. 4, these constituents are connected with each other through bus lines. In the following description, the main processors 21, 31, 41 and 51 will be appropriately referred to as "first main processor 21", "second main processor 31", "third main processor 41" and "fourth main processor 51", respectively for their individualization. Similarly, the memories 22, 32, 42 and 52 will be appropriately referred to as "first memory 22", "second memory 32", "third memory 43" and "fourth memory 53", respectively for their individualization.

The image sensor 12 receives light transmitted from a subject through lens unit 11 and takes an image of the subject. For instance, the image sensor 12 is formed by a CMOS sensor capable of recording motion pictures at a 4K2K resolution. Data of a 4k image taken by the image sensor 12 is outputted to the main processors 21, 31, 41 and 51. The audio input/output unit 14 includes a built-in microphone, a speaker, an external microphone terminal, an XLR terminal, a headphone terminal, etc. and inputs/outputs audio data. When taking motion pictures, the audio data collected by the built-in microphone or the external microphone is outputted to the audio IC 13. The audio IC 13 converts the audio data (analogue) to digital data and further outputs it to the main processors 21, 31, 41 and 51. This audio data is encoded together with later-mentioned image data. When reproducing the motion pictures, the audio data reproduced by the main processors 21, 31, 41 and 51 is outputted to the audio IC 13. Then, the audio IC 13 converts the audio data (digital) to analogue data and further outputs it to the speaker or the headphone.

The main processors 21, 31, 41 and 51 encode image data in segmented areas obtained by dividing a taken image. In detail, the first main processor 21 encodes the image data in the first area 91, the second main processor 31 does the image data in the second area 92, the third main processor 41 does the image data in the third area 93, and the fourth main processor 51 encodes the image data in the fourth area 94.

The memory cards 24, 34, 44 and 54 are fitted into the card slots 23, 33, 43 and 53 of the image pickup device 1, respectively. Here, the memory cards 24, 34, 44 and 54 are appropriately referred to as "first memory card 24", "second memory card 34", "third memory card 44" and "fourth memory card 54", respectively for their individualization. The first memory card 24 is fitted into the first card slot 23, the second memory card 34 into the first card slot 33, the third memory card 44 into the third card slot 43, and the fourth memory card 54 is fitted into the fourth card slot 53. Then, the main processors 21, 31, 41 and 51 write the encoded files in the memory cards 24, 34, 44 and 54, respectively.

The main processors 21, 31, 41 and 51 encode the segmented images obtained by dividing the image taken by the image sensor 12 by four. Since the image sensor 12 is provided with a 4K2K resolution, the encoded files recorded in the memory cards 24, 34, 44 and 54 contain AV stream data with a HD resolution and management information etc. The main processors 21, 31, 41 and 51 input the 4k image. Then, the main processors 21, 31, 41 and 51 extract image data in respective allocated areas, executing an encoding operation. For instance, the first main processor 21 extracts the image data corresponding to the first area 91 and encodes it. Thus, the first main processor 21 does not encode the image data corresponding to the second area 92, the third area 93 and the fourth area 94. Similarly, the second main processor 31 extracts and successively encodes the image data corresponding to the second area 92. The third main processor 41 extracts and successively encodes the image data corresponding to the third area 93. The fourth main processor 51 extracts and successively encodes the image data corresponding to the fourth area 94. In this way, since the segmented images obtained by quartering the overall image 90 are encoded in parallel by the four main processors 21, 31, 41 and 51, the image data can be processed at high speed. In addition, general-purpose ICs each encoding image data with a HD resolution can be used for the main processors 21, 31, 41 and 51. Since the 4k image is quartered and further encoded by the main processors 21, 31, 41 and 51, it is possible to reduce the burden on each main processor executing the encoding process.

At reproducing the recorded image, the main processors 21, 31, 41 and 51 decode the image data and transmit the decoded data to the sub-processor 61. The sub-processor 61 integrates four image data. Consequently, respective image data divided in the first to the fourth areas 91 - 94 are synthesized into one. Then, the sub-processor 61 outputs the integrated image data to the display driver 63 or 65. The display driver 63 generates display driving signals for driving the monitor 64, based on the image data transmitted from the sub-processor 61. The monitor 64 displays the synthesized 4k image based on the display driving signals. Similarly, the display driver 65 generates display driving signals for driving the view finder 66, based on the image data transmitted from the sub-processor 61. The view finder 66 displays the synthesized 4k image based on the display driving signals. In this way, the 4k image is reproduced on the monitor 64 or the view finder 66. The image pickup device 1 may be constructed so that a user can select either the monitor 64 or the view fmder 66 in charge of displaying the 4k image. When reproducing an image during recording in the form of a live-view, the main processors 21, 31, 41 and 51 transmit the image data before encoding to the sub-processor 61. Then, similarly to the above-mentioned process, the sub-processor 61 synthesizes four image data and outputs the synthesized image data to the display driver 63 or 65.

The memories 22, 32, 42 and 52 are respective buffer memories built in the image pickup device 1 and used for processing at the corresponding main processors 21, 31, 41 and 51. The memories 22, 32, 42 and 52 are formed by DRAMs (Dynamic Random Access Memories), such as DDR (Double Data Rate) memories. For instance, the first main processor 21 stores data necessary for the encoding process etc. in the first memory 22 temporarily. Similarly, the second main processor 31 stores data necessary for the encoding process etc. in the second memory 32 temporarily. The third main processor 41 stores data necessary for the encoding process etc. in the third memory 42 temporarily. The fourth main processor 51 stores data necessary for the encoding process etc. in the fourth memory 52 temporarily. The memory 62 is also a buffer memory built in the image pickup device 1 and used for processing at the sub-processor 61. For instance, the sub-processor 61 stores data necessary for the encoding process etc. in the memory 62 temporarily.

The HDMI terminals 67 are connected to the HDMI terminals 101 of the external display unit 102, such as a television, through HDMI cables. Here, four HDMI terminals 67 are connected to the external display unit 102. Consequently, it becomes possible to transfer data between the image pickup device 1 and the external display unit 102. The HDMI terminals 101 transfer the files encoded by the main processors 21, 31, 41 and 51 to the external display unit 102. For instance, the encoded file encoded by the first main processor 21 is transferred from the first HDMI terminal 67. Similarly, the encoded file encoded by the second main processor 31 is transferred from the second HDMI terminal 67. The encoded file encoded by the third main processor 41 is transferred from the third HDMI terminal 67, while the encoded file encoded by the fourth main processor 51 is transferred from the fourth HDMI terminal 67. The encoded files are decoded and synthesized even in the external display unit 102 similarly. Thus, the 4k image can be displayed on the external display unit 102.

The first main processor 21 is provided with a camera controller 27 and a system controller 28. The camera controller 27 serves to control a prior processing about camera zoom and iris. The system controller 28 executes file management and creation of a thumbnail image. In addition, the system controller 28 includes a H.264 encoder for encoding the image data. Note that these processes will be described later. Although the second main processor 31, the third main processor 41 and the fourth main processor 51 are also provided with the camera controllers 27 and the system controllers 28 respectively, their illustrations are eliminated from the figure for its simplicity.

### (Recording)

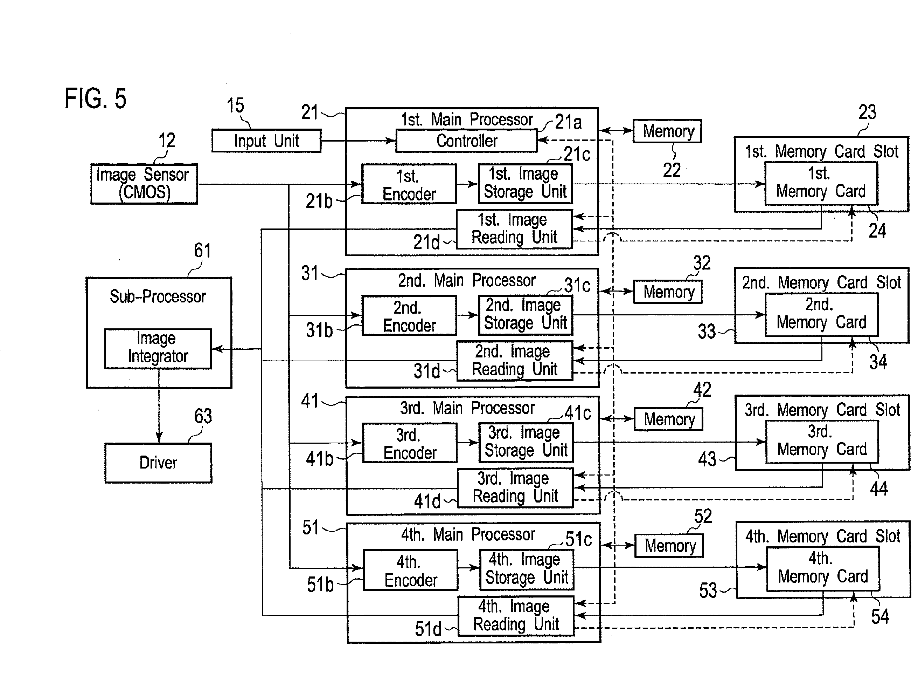

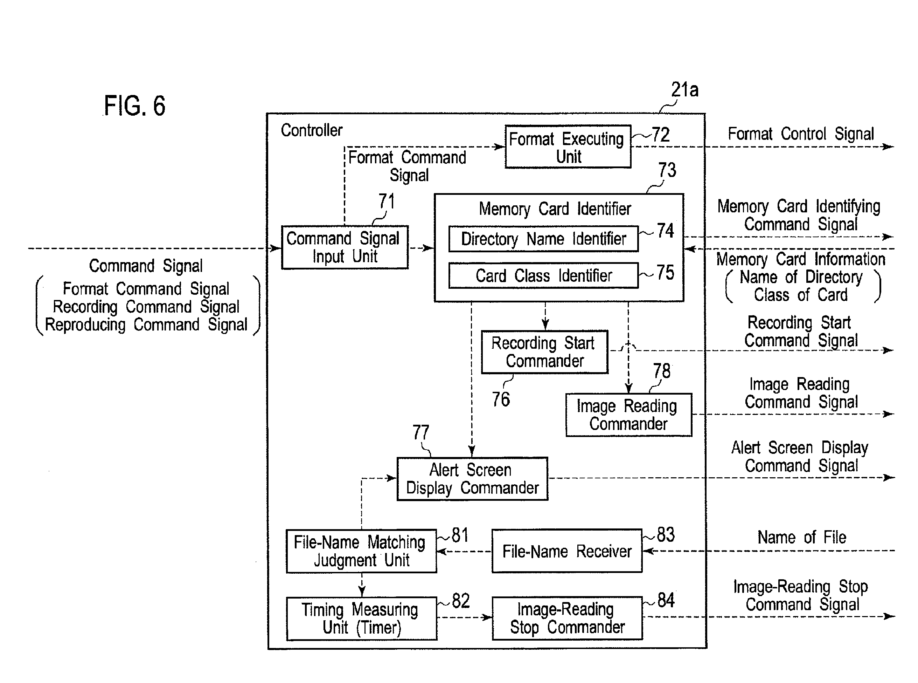

First, the control function of the above main processors 21, 31, 41 and 51 will be described with reference to Figs. 5 and 6. Fig. 5 is a functional block diagram showing the constitution of the main processors 21, 31, 41 and 51. Note that constituents overlapping with those in the above description may be eliminated arbitrarily.

As shown in Fig. 5, the first main processor 21 includes a controller 21a, a first encoder 21b, a first image storage unit 21c and a first image reading unit 21d. The second main processor 31 includes a controller 31a, a second encoder 31b, a second image storage unit 31c and a second image reading unit 31d. Similarly, the third main processor 41 includes a controller 41a, a third encoder 41b, a third image storage unit 41c and a third image reading unit 41d, while the fourth main processor 51 includes a controller 51a, a fourth encoder 51b, a fourth image storage unit 51c and a fourth image reading unit 51d.

For instance, in case of recording, a user will push a recording start button of the input unit 15. Then, on receipt of the user's manipulation of instructing the device's recording, the input unit 15 outputs a recording instructive signal to the first main processor 21. Consequently, the controller 21a of the first main processor 21 controls respective units in the main processors 21, 31, 41 and 51. For instance, the controller 21a outputs control signals for executing the recording operation, such as an encoding process and a storage process, to the main processors 31, 41 and 51 through the bus lines. Thus, the 4k image taken by the image sensor 12 is inputted to the main processors 21, 31, 41 and 51.

The image sensor 12 outputs data constituting the 4k image to the first encoder 21b, the second encoder 31b, the third encoder 41b and the fifth encoder 51b. The first encoder 21b extracts a segmented image to be assigned into the first area 91 from the 4k image and further encodes the extracted image. Similarly, the second encoder 31b, the third encoder 41b and the fourth encoder 51b extracts their corresponding segmented images from the 4k image and further encode the extracted images, respectively. The first image storage unit 21c stores the segmented image encoded by the first encoder 21b in the first memory card 24. Similarly, the second image storage unit 31c, the third image storage unit 41c and the fourth image storage unit 51c store the segmented images encoded by the second encoder 31b, the third encoder 41b and the fourth encoder 51b in the second memory card 34, the third memory card 44 and the fourth memory card 54, respectively. When a user pushes a recording stop button, the input unit 15 outputs a recording stop signal to the first main processor 21 on receipt of the user's manipulation of stopping the device's recording operation. The controller 21a of the first main processor 21 allows all of the main processors 21, 31, 41 and 51 to execute the recording stop operations. In this way, the encoded files having motion pictures from the start of recording to the ending of recording encoded therein are stored in the memory cards 24, 34, 44 and 54, respectively.

### (Reproducing)

Next, the operation of reproducing respective images contained in the encoded files will be described. In reproducing the images stored in the memory cards 24, 34, 44 and 54, the reproducing (playback) start button of the input unit 15 is pushed by a user. Then, on receipt of the user's manipulation of instructing the device's reproducing, the input unit 15 outputs a reproducing instructive signal to the first main processor 21. Consequently, the controller 21a of the first main processor 21 controls respective units in the main processors 21, 31, 41 and 51. For instance, the controller 21a outputs control signals for executing the reproducing operation, such as a readout process, to the main processors 31, 41 and 51 through the bus lines.

The main processors 21, 31, 41 and 51 read out the images stored in the memory cards 24, 34, 44 and 55, respectively. For instance, the first main processor 21 reads out the encoded file corresponding to the first area 91, which is saved in the first memory card 24. The second main processor 31 reads out the encoded file corresponding to the second area 92, which is saved in the second memory card 34. Similarly, the third main processor 41 reads out the encoded file corresponding to the third area 93, which is saved in the third memory card 44, while the fourth main processor 51 reads out the encoded file corresponding to the fourth area 94, which is saved in the fourth memory card 54. Then, the main processors 21, 31, 41 and 51 decode the read encoded files and output data of HD images to the sub-processor 61. The sub-processor 61 integrates four HD images and output the image data of the integrated images to the display driver 63.

As mentioned above, the image pickup device 1 divides the overall screen for encoding. Further, the image pickup device 1 produces encoded files for every segmented images and records the files in the memory cards different from each other. Accordingly, when reproducing the overall image appropriately, it is necessary to load the corresponding encoded files from the memory cards. That is, it is required to record and reproduce a plurality of encoded files so as to be consistent with each other. A method of managing the encoded files will be described below. The constitution of the controller 21a to manage a plurality of encoded files will be described with reference to Figs. 4 to 6, below. Fig. 6 is a functional block diagram showing the constitution of the first main processor 21.

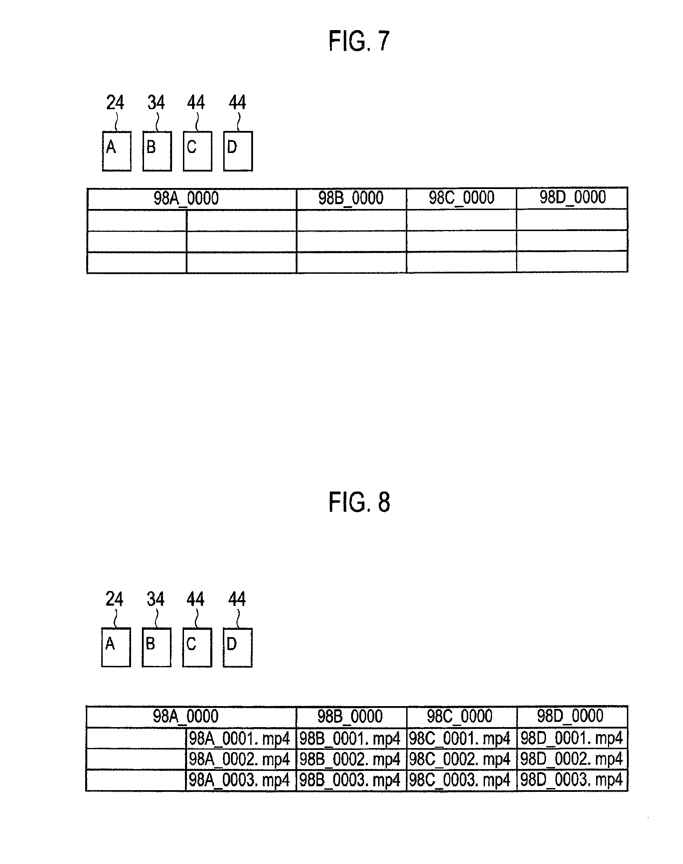

The following description refers to Figs. 7 to 16. Figs. 7 to 16 are views showing the memory cards 24, 34, 44 and 54 and respective directories created in the memory cards 24, 34, 44 and 54. As shown in Fig. 6, the controller 21a includes a command signal input unit 71, a format executing unit 72, a memory card identifier 73, a recording start commander 76, an alert screen display commander 77, an image reading commander 78, a file-name consistency judgment unit 81, a timing measuring unit 82, a file-name receiver 83 and an image-reading stop commander 84. The memory card identifier 73 includes a directory name identifier 74 and a card class identifier 75.

### (Formatting)

The formatting process of the memory cards 24, 34, 44 and 54 will be described at first. In formatting the memory cards 24, 34, 44 and 54, a format button is pushed by a user under condition that the memory cards 24, 34, 44 and 54 are fitted to the image pickup device 1. Then, on receipt of the user's manipulation of instructing the device's formatting, the input unit 15 outputs a format command signal to the controller 21a. The format command signal is inputted to the command signal input unit 71. Then, the command signal input unit 71 outputs the format command signal to the format executing unit 72. The format executing unit 72 formats the first memory card 24 and outputs a format control signal to the main processors 31, 41 and 51. When the format control signal is inputted to the main processors 31, 41 and 51, the main processors 31, 41 and 51 format the memory cards 34, 44 and 54, respectively. In addition, before recording the images in a 4k mode, the number of files each memory card holds is assorted at zero (0).

When the format command signal is inputted to the format executing unit 72, the main processors 21, 31, 41 and 51 format the memory cards 24, 34, 44 and 54 and further create the directories for recording the encoded files in the memory cards 24, 34, 44 and 54. Then, it is executed to make directory names consistent with the memory cards 24, 34, 44 and 54, respectively. Assume that for instance the identification number of the first memory card 24 is represent by A, that of the second memory card 34 by B, that of the third memory card 44 by C, the identification number of the fourth memory card 54 is represent by D. Then, the format executing unit 72 creates a directory named "98A_0000" for the first memory card 24. In addition, the format executing unit 72 outputs a format control signal to the second main processor 31 so that it creates a directory named "98B_0000" for the second memory card 34. Similarly, the format executing unit 72 outputs the format control signals to the third main processor 41 and the fourth main processor 51 so that they create the directories named "98C_0000" and "98D_0000" for the third memory card 44 and the fourth memory card 54, respectively.

In this way, the directories named "98A_0000", "98B_0000", "98C_0000" and "98D_0000" are created for the memory cards 24, 34, 44 and 54, respectively. The layers of these directories are equal to each other throughout the memory cards 24, 34, 44 and 54. In each directory name, "98" represents serial information about the image pickup device 1, specifically, the last 2 digit number of the manufacturer's serial number. In case of a different image pickup device, the first 2 digit number of the directory name will be different from the number of "98". The alphabets "A" to "D" represent respective identification numbers (identifiers) of the memory cards, as mentioned above. Thus, the directory name created for each of the memory cards 24, 34, 44 and 54 contains the manufacturer's serial number of the relevant image pickup device 1 and the card number allocated to each memory card.

In addition, the section "0000" in the second half of the directory name represents an identifier of the created directory, which is formed by a sequential number corresponding to the order of creation. This sequential number of the directory continues in another memory card. For instance, in case of formatting four different memory cards from the illustrated memory cards 24, 34, 44 and 54, the sequential number of a newly-created directory will be "0001". The sequential number is incremented corresponding to the number of formatting processes. Thus, the sequential number in the directory is incremented with respect to each formatting process. In order to manage the directory names of four memory cards 22, 32, 42 and 52, the image pickup device 1 is constructed so as to enable an execution of formatting only when all of four memory cards are fitted to the device completely. Then the image pickup device 1 is capable of recording and reproducing motion pictures under condition that four simultaneously-formatted memory cards are fitted to the device 1. In other words, it is judged whether four memory cards presently-fitted to the device 1 were simultaneously formatted or not, based on their directory names.

### (File Management)

When recording motion pictures in a high-resolution mode after formatting, the encoded files are stored in respective directories. That is, when the recording command signal is inputted to the command signal input unit 71, the main processors 21, 31, 41 and 51 execute the recording operation as mentioned above. Consequently, the main processors 21, 31, 41 and 51 write the encoded files containing AV stream data in the memory cards 24, 34, 44 and 54, respectively. Here, as shown in Fig. 8, the main processors 21, 31, 41 and 51 create file names so as to be consistent with the encoded files stored in the memory cards 24, 34, 44 and 54, respectively.

Assume that for instance the file names stored in the directory "98A_0000" of the first main processor 21 are represented by "98A_0001.mp4", "98A_0002.mp4", "98A_0003.mp4" and "98A_0004.mp4". It is noted here that "98A" contained in the file names is a combination of the serial number of the image pickup device 1 with the identification number of the first main processor 21. In addition, "0001" to "0003" in the second half (behind a bottom bar) of the directory names are sequential numbers attached in the order of creation. This sequential number is increased as the number of scenes (files) contained in the contents gets increased. Thus, after creating the encoded file of "98A_0001.mp4", the encoded file of"98A_0002.mp4" is created. Similarly, after creating the encoded file of "98A_0002.mp4", the encoded file of "98A_0003.mp4" is created. In this way, the sequential number of the file name is incremented with respect to each creation of the encoded file. Note that "mp4" in the file name represents a file type (extension) of the encoded file. Thus, taken images are encoded in the form of MP4 type.

The file names stored in the directory "98B_0000" are also similar to those of the directory "98A_0000" except for the identification number of the memory card. That is, the file names of "98B_0001.mp4", "98B_0002.mp4", "98B_0003.mp4" and "98B_0004.mp4" are stored in the directory "98B_0000" of the second memory card 34. The file names stored in the directory "98C_0000" of the third memory card 44 and the directory "98D_0000" of the fourth memory card 54 are also similar to those of the directory "98A_0000", so that the encoded files having their names containing the identification number "C" and "D" for the memory cards are stored. Then, the sequential number of the file name is incremented in the order of creating the encoded files.

As for the file names of two given encoded files, if they are different from each other with respect to the identification number of the memory card despite that their serial numbers of the image pickup device and their sequential numbers of the file name are identical to each other, then these encoded files can be regarded as two encoded files recording an identical scene. On the other hand, if two given encoded files are different from each other with respect to the serial number of the image pickup device or the sequential number of the file name, then these encoded files can be regarded as two encoded files recording different scenes. In this way, it is judged whether the encoded files in question are encoded files recorded at the same time or not, based on the constituents of the file name.

In reproducing the 4k image, the first image reading unit 21d, the second image reading unit 31d, the third image reading unit 41d and the fourth image reading unit 51d read out the files "98A_0001.mp4", "98B_0001.mp4", "98C_0001.mp4" and "98D_0001.mp4", respectively. Then, the sub-processor 61 integrates these files for reproducing.

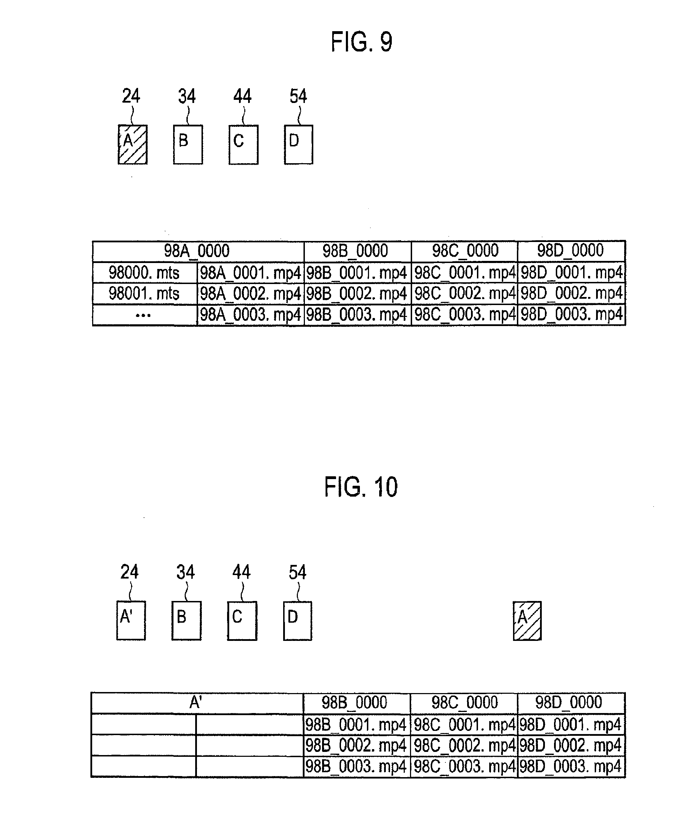

Further, a user can switch the recoding mode of the image pickup device 1 to a normal mode to take an image at a HD-resolution. In the normal mode, for instance, the taken image is encoded in AVCHD format. Of course, the image may be encoded in MP4 form or MOV form. Then, the encoded files recorded in AVCHD format are stored in the first memory card 24. One example of the file names stored at this time is shown in Fig. 9. In the normal mode, the encoded files are recorded with the file names of "98000.mts" and "98001.mts". Then, "98" contained in the file names represents the serial number of the image pickup device 1, while "000" and "001" represent the sequential numbers attached in the order of creation. This sequential number is increased as the number of scenes contained in the contents gets increased. Further, "mts" behind comma (,) represents a file type (extension) of the encoded file.

Of course, the memory card for a HD image is not limited to only the first main card 24. For instance, the HD image may be recorded in any of the second memory card 34, the third memory card 44 and the fourth memory card 54. In addition, the encoded files of the HD image may be recorded in two or more memory cards. Alternatively, it is preferable to record a HD image and a 4k image in different directories on condition that a special directory for storing the HD image is previously created at formatting. Moreover, not only motion pictures but a still image may be recorded in the first memory card 24. In this case, the 4k image, the HD image and the still image may be recorded in different directories. As an example, the directory layer where a directory for recording the 4k image is created is represented by "PRIVATE/JVC/JMAV". Similarly, the directory layer where a directory for recording the HD image is created is represented by "PRIVATE/JVC", while the directory layer where a directory for recording the still image is created is represented by "PRIVATE/DCIM". The main processors 21, 31, 41 and 51 create these directories in the memory cards 24, 34, 44 and 54 at formatting. In this case, any one of respective directories "98A_0000" to "98D_0000" is created under the directory layer of "JMAV".

Note that if the memory card for recording the still image or the HD image is formed by only the first memory card 24, the remaining capacity of the first memory card 24 gets reduced in comparison with that of the other memory card. Therefore, the memory card for recording the still image or the HD image may be differentiated from the memory card for recording the 4k image. That is, another memory card for recording the still image or the HD image may be prepared in advance. In this case, the memory card for the 4k image will be replaced with this memory card in recording the still image or the HD image. Alternatively, the still image or the HD image may be recorded in one of four memory cards, which has the largest remaining capacity of the four.

It is possible to manage the files with respect to the directory name and the file name in the memory cards 24, 34, 44 and 54. The image pickup device 1 may be constructed so as to instruct to start recording only when a predetermined condition is satisfied, while disabling recording unless satisfied. In detail, the operation is controlled so that the 4k image cannot be recorded in the memory cards 24, 34, 44 and 54 in the following cases:
(a) Four memory cards consistent with the card slots are not fitted (e.g. a memory card formatted by a different image pickup device 1, a memory card formatted at a different timing despite the identical image pickup device 1, etc.);
(b) At least one unformatted memory cards is fitted to the card slot (i.e. a memory card with no directory is fitted to the card slot.);
(c) Four memory cards are not respectively fitted to the corresponding card slots appropriately (e.g. a case that the memory card 24 having the directory "98A_0000" corresponding to the first main processor 21 is fitted to the second card slot 33 by mistake.);
(d) The numbers of scenes are not equal to each other throughout four memory cards; and.
(e) A card's protect switch is locked in at least one memory card.
   In addition, irrespective of four card slots 23, 33, 43 and 53, the operation may be controlled so as to prohibit recording of an image in the following condition that
(f) the number of files or the file number reaches an administrative upper limit.

In connection with the above restriction of recording, the monitor 64 may display an alert screen. As with the above case (a), if using an inconsistent memory card, then nonconformity is caused in terms of the directory name. For instance, as shown in Fig. 10, if the first memory card 24 to be fitted to the first card slot 23 is replaced with another card (e.g. card shown A' of Fig. 10), then its directory name falls into nonconformity with the directory names of the other cards. Thus, when at least one memory card is not consistent with the other memory cards, the recording and reproducing operations are prohibited. Note that a HD image or a still image can be recorded in the first memory card 24. In case of recording the HD image or the still image in the first memory card 24, a user may fit a memory card, which has been used in the second card slot 33, the third card slot 43 or the fourth card slot 53, into the first card slot 23. In such a case, for instance, a memory card with the directory "98A_0000" created therein is fitted into the first card slot 23 to record the HD image or the still image. Note that in order to enable a recording of the HD image or the still image by interchanging four memory cards in this way, the directories are created on the above layers of four memory cards at formatting.

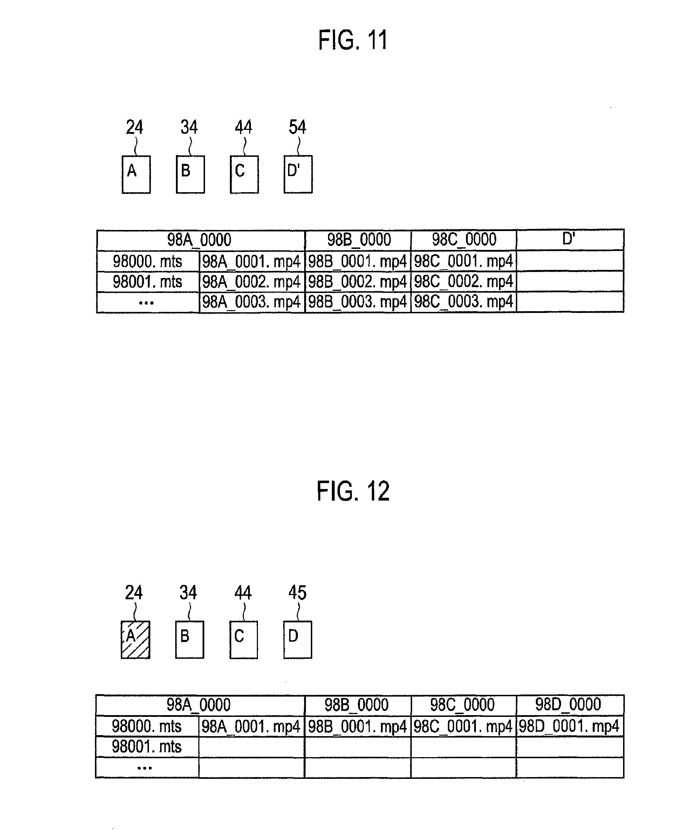

As shown in Fig. 11, if the fourth memory card 53 is lost and therefore, another memory card (shown with D' of Fig. 11) is fitted to the fourth card slot 53, then nonconformity is caused in terms of the directory name. Also in this case, the recording and reproducing operations are prohibited. However, the HD image and the still image can be recorded in the first memory card 24. When continuously recording the 4k image, four new memory cards are prepared. Then, the so-prepared (four) memory cards are formatted to create consistent directories. The directories will be named "98A_0001", "98B_0001", "98C_0001" and "98D_0001", respectively. In consideration of a lost card, it is desirable to prepare four spare memory cards in advance. Of course, if a mating memory card D is found out, a user has only to fit the memory card 54 into the fourth card slot 53.

Fig. 12 shows the first memory card 24 with the HD image recorded.

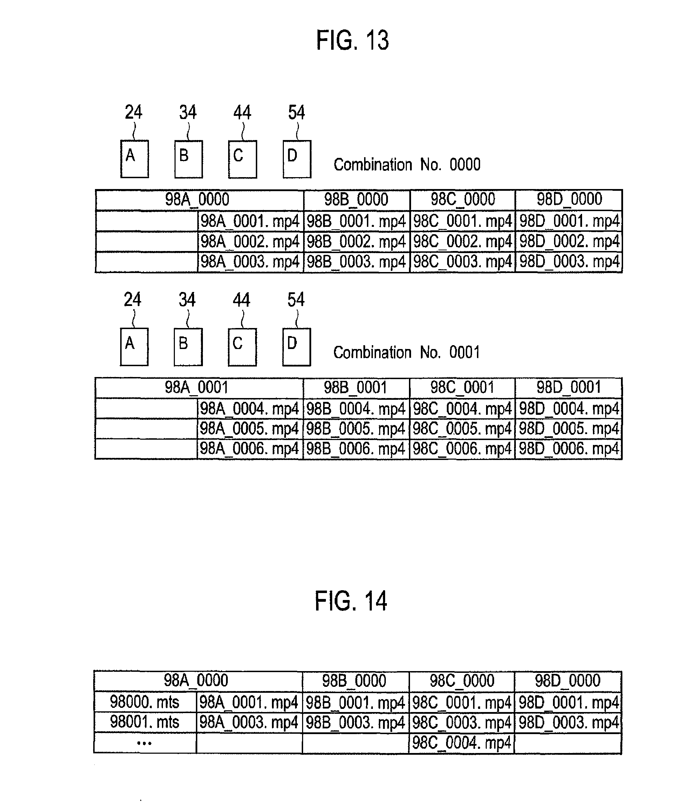

Fig. 13 shows a situation where the memory cards having their directory names with the sequential number of "0000" are fully occupied with the encoded files and therefore, these memory cards are replaced with the memory cards having their directory names with the sequential number of "0001". Suppose that for instance when the encoded files with the sequential number of "0003" are recorded in the memory cards having their directory names with the sequential number of "0000", there is no remaining capacity in the memory cards. Then, the sequential numbers starting from "0004" are attached to the file names in the above memory cards with the sequential number of "0001" in turn. That is, even if replacing the memory cards, the sequential numbers for file names become continuous. Note that the sequential number of the lately-recoded file is memorized in an EEPROM or the like. Thus, even when the image pickup device 1 is powered off or the memory card is replaced with another memory card, the sequential numbers will be sequentially attached to new files thereafter.

Suppose here that a new memory card having the directory's sequential number of "0001" is fitted into the card slot under condition that the preceding memory card having the directory's sequential number of "0000" still leaves a recordable capacity. Moreover, it is assumed that the encoded files with the sequential numbers up to "0006" have been recorded in the memory card having the directory's sequential number of "0001". Under such a situation, if the previous memory card having the directory's sequential number of "0000" is again fitted to the card slot, the sequential number of a next-recorded encoded file becomes "0007". Note that when the sequential number of file name reaches an upper limit of "9999", it is required to reset the format and the management number. After the memory cards in the combination of "0000" in the sequential number of directory have been recorded fully, of course, even when the memory cards in the combination of "0000" are used again on condition of increasing their free spaces by partially deleting or removing the encoded files through a PC (Personal Computer) etc., the sequential number is incremented similarly. That is, the sequential number of the file name is incremented with respect to each creation of an encoded file irrespective of the directory name.

When the sequential numbers of the directory names are consistent with each other, the recording and reproducing operations are prohibited. Suppose that for instance the directories of the memory cards 24, 34 and 54 are named "98A_0000", "98B_0000" and "98D_0000", respectively, while the directory of the memory card 44 is named "98C_0001". Then, as there is an inconsistency in the directory name throughout four memory cards 24, 34, 44 and 54, the image pickup device 1 is unable to record and reproduce the image data.

In addition, when the memory cards in the card slots contain a memory card formatted by the other image pickup device 1, the recording and reproducing operations are prohibited. Suppose that for instance the memory card 44 formatted by the image pickup device 1 characterized by "50" in the last 2 digits of the manufacturer's serial number is fitted into the third card slot 43, while the first card slot 23, the second card slot 33 and the fourth card slot 53 contain the first memory card 24, the second memory card 34 and the fourth memory card 54 all formatted by the image pickup device 1 of "98" in the last 2 digits of the manufacturer's serial number. Thus, when the directory names contain an inconsistency in the manufacturer's serial number of the image pickup device 1, it is unable to record and reproduce the image data. In this way, the possibility of recording and reproducing the image data is determined by judging whether the directory names of four memory cards 24, 34, 44 and 54 are consistent with each other or not. In other words, the condition of allowing both recording and reproducing of image data is established based on the directory names.

Note that the image pickup device 1 may be constructed so as to enable both recording and reproducing of image data even when the serial number of the image pickup device 1 for recording does not accord with the serial numbers in the directory names of four memory cards 24, 34, 44 and 54. Then, four memory cards 24, 34, 44 and 54 formatted by the image pickup device 1 of "50" in the last 2 digits of the manufacturer's serial number can be used by the image pickup device 1 of "98" in the last 2 digits of the manufacturer's serial number. In other words, the memory cards 24, 34, 44 and 54 with the consistent directory names can be used by any image pickup device 1.

Fig. 14 shows a situation that the numbers of files (scenes) contained in the directories are not consistent with each other. It is noted here that the number of files is the number of encoded files obtained by encoding the 4k image (i.e. files of mp4 type) and does not include the number of files of the other type, such as encoded files of the HD image and files of the still image. As shown in Fig. 14, the number of encoded files contained in the third memory card 44 gets larger than the numbers of encoded files contained in the other memory cards. For instance, if deleting some encoded files from the first memory card 24, the second memory card 34 and the fourth memory card 54 by means of a PC (Personal Computer) etc., such a phenomenon is caused. In order to deal with such a situation, the image pickup device 1 is constructed so as to enable a reproducing of encoded files up to a file layer where the sequential numbers of file names are consistent with each other throughout the memory cards. In the illustrated diagram, the encoded files corresponding to the encoded file of "0004" in the sequential number recorded in the third memory card 44 are deleted. Therefore, in this case, the image pickup device 1 can reproduce scenes of the encoded files having their sequential numbers of "0001" and "0003". In addition, the image pickup device 1 is also constructed so as to prohibit a further recording in case of disaccord in the numbers of scenes (encoded files) throughout the memory cards.

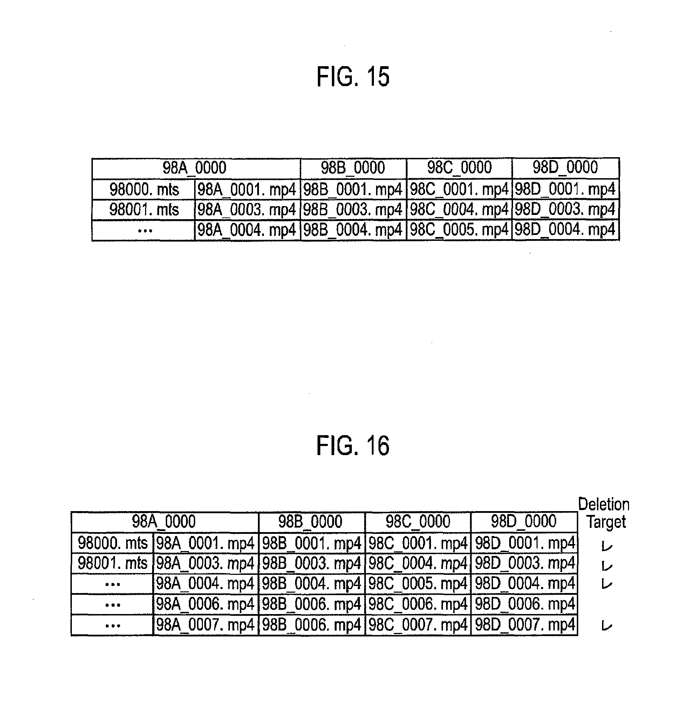

Fig. 15 is a view to explain a situation where the sequential numbers of encoded files for respective memory cards are not consistent with each other although the numbers of encoded files are equal to each other throughout the memory cards. The encoded files with the sequential numbers of "0001", "0003" and "0004" are recorded in common with the first memory card 24, the second memory card 34 and the fourth memory card 54, while the encoded files with the sequential numbers of "0001", "0004" and "0005" are recorded in the third memory card 44. That is, although the number of encoded files is three with respect to each memory card, there is an inconsistency in terms of the sequential numbers of files constituting each memory card. For instance, on the second layer in the list from top, the sequential numbers consist of "0003", "0003", "0004" and "0003", representing a discordance in the sequential number.

In such a case, the image pickup device 1 is constructed so as to reproduce the 4k image for a predetermined time and inform a user of a fact that there is a mismatching in the sequential numbers of files constituting each memory card. For instance, the image pickup device 1 reproduces the 4k image by only five seconds. Consequently, as a different scene is displayed on the third area 93 only, a user could recognize that there is a mismatching in the file names. In addition, the encoded files of different scenes have different reproducing times (recording times) from each other. Therefore, a user may judge whether an encoded file in question is derived from a different scene from that of the other encoded files due to accordance/discordance of the reproducing times. Note that since the positional relationship of respective segmented images forming the 4k image corresponds to the positional relationship of card slots, it is possible to grasp which of the memory cards in the card slots does contain a mismatching in the file names, with ease.

On recognition of the mismatching in the file names, a user will delete an encoded file(s) constituting an inconsistent combination by means of a PC (Personal Computer) etc. Here, the encoded files with the sequential numbers of "0003" and "0005" are deleted by the user. In detail, the user deletes the encoded files with the sequential number of "0003" included in the first memory card 24, the second memory card 34 and the fourth memory card 54 and the encoded file with the sequential number of "0005" included in the third memory card 44. As a result, the encoded files with the sequential numbers of "0001" and "0004" are remained in four memory cards 24, 34, 44 and 54. Thus, it is possible to equalize the numbers of scenes and the file names throughout the memory cards. The image pickup device 1 is constructed so as to enable a recording of images when the numbers of files accord with each other throughout the memory cards. In case of recording the image, the next sequential number (i.e. "0006" in this example) or the sequential numbers that follow it are attached in the file names. Also in this case, the 4k image with the sequential numbers that follow "0006" will be recorded and reproduced normally.

In addition, the scenes recorded in four memory cards 24, 34, 44 and 54 may be protected on software. The so-protected scenes could not be deleted or edited any more. The setting/cancelling of protection is executed to four encoded files in block. For instance, in a reproduction pause state of making a pause on a scene during playback, the image pickup device 1 is constructed so as to enable a setting of protecting the scene and a cancelling of the protection. When executing the setting of protection, four encoded files with the identical sequential number in the file names are protected simultaneously. Moreover, the image pickup device 1 may be constructed so as to enable a setting of protecting the scene and a cancelling of the protection through an index screen displaying the recorded scenes. In the index screen, there is displayed a list of file names of encoded files recorded in the first memory card 24. The setting of protection is performed by a user's checking of the file names in the list. The protection of a scene contains a simultaneous setting/cancelling of four memory cards. The so-protected encoded files are displayed with key marks.

Similarly in case of deleting a scene, the image pickup device 1 is constructed so as to enable an accepting of a user's manipulation of deleting the scene from the above reproduction pause state and index screen. In deleting the scene, four encoded files are deleted simultaneously. The user's manipulation of detecting a scene will be described with reference to Fig. 16. First, before deleting a scene, the file names are checked by a user. If there is a discordance in the file names, then the user stops the deleting operation and returns the display to the index screen. Thus, the deleting operation of files is performed when the file names are consistent with each other. In the example illustrated in Fig. 16, as it represents that the encoded file with the sequential number of "0003" is missing in the third memory card 44, there exists a discordance in the file names. Accordingly, the deleting operation of encoded files on and after "0003" in the sequential number is stopped to return the display to the index screen. Alternatively, the image pickup device 1 may be operated so as to display an alert (caution) message, for example, "Deletion Failed (card C)" on the monitor.

In deleting, it is performed to check whether a scene as the target of deletion is being protected or not. If the scene to be deleted is protected, the deleting operation is stopped and an alert message, such as "Not Deletable" is displayed. Further, in the setting/cancelling operations of protection with use of a PC (Personal Computer) the like, there is a case where the protected/unprotected states are not consistent with each other throughout four memory cards. Suppose that for instance only the file of "98D_0001. mp4" is protected, while the other files of "98A_0001. mp4", "98B_0001. mp4" and "98C_0001. mp4" are not protected. Also in this case, before the deleting operation, the first main processor 21 detects the protected/unprotected states of respective files and stops the deleting operation.

As mentioned above, by executing the file management corresponding to the number of files and the directory names, it becomes possible to manage the encoded files with ease. For instance, under condition that the memory cards are fitted to the card slots, the information about the directory names and the numbers of files is transmitted from the second main processor 31, the third main processor 41 and the fourth main processor 51 to the first main processor 21. Then, the first main processor 21 judges whether the directory names and the numbers of files are consistent with each other throughout four memory cards or not. Further, when recording or deleting an image, the information about the names of objective encoded files is transmitted from the second main processor 31, the third main processor 41 and the fourth main processor 51 to the first main processor 21. Then, the controller 21a of the first main processor 21 serves to judges whether the file names of four encoded files are consistent with each other or not.

With the above operation, it is possible to eliminate the need for the first main processor 21 to usually manage the file names of all encoded files recorded in four memory cards. In managing the names of files, it is necessary to manage 40,000 encoded files at a maximum since the sequential number of file name ranges from "0000" to "9999" with respect to each memory card. In order to usually manage the encoded files by the file names, the first main processor 21 has to manage all of the file names. On the contrary, the file management corresponding to the number of files and the directory names eliminates the need for managing all of the names of the encoded files, enabling an easy management of the encoded files. In case of executing the setting/cancelling operation of protection or the deleting operation of files, the information about what number encoded file from the top of the list is an objective file to be processed is transmitted from the first main processor 21 to the second main processor 31, the third main processor 41 and the fourth main processor 51. Then, on receipt of the information, the second main processor 31, the third main processor 41 and the fourth main processor 51 transmit the names of objective files or their reproducing times to the first main processor 21.

With the above operation, it is possible to reduce the amount of data transmitted from the second main processor 31, the third main processor 41 and the fourth main processor 51 to the first main processor 21 through the bus lines. In other words, assuming that only the numbers of files and the directory names are transmitted from the second main processor 31, the third main processor 41 and the fourth main processor 51 to the first main processor 21 in advance, it has only to transmit the names of files with respect to each processing. As a result, it is possible to reduce the amount of data transferred through the bus lines, realizing an easy management of the encoded files. In addition, each of the second main processor 31, the third main processor 41 and the fourth main processor 51 does not have to grasp the file names that the other main processors are managing. Therefore, it is possible to execute the file management with ease, allowing a reduction of processing load.

An identical CPU is available for the first main processor 21, the second main processor 31, the third main processor 41 and the fourth main processor 51.

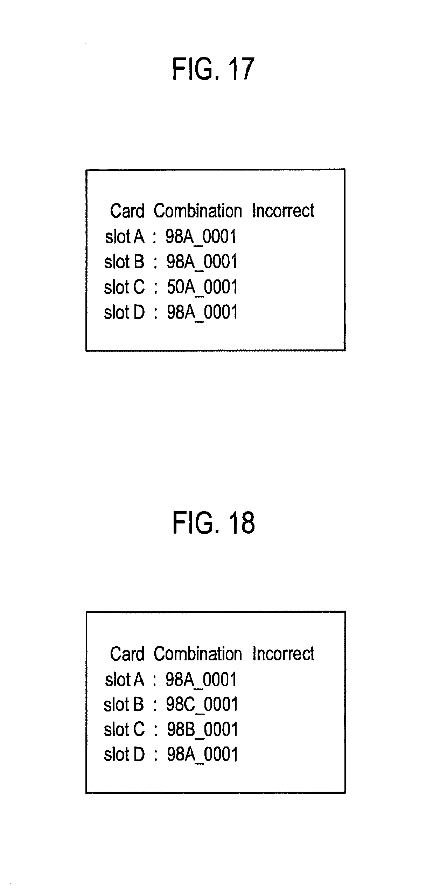

The image pickup device 1 may be constructed so as to display an alert (caution) message on the monitor when there is an inconsistency in the memory card, the directory name, the file names, etc. For instance, if the third memory card 44 is formatted by the image pickup device 1 of "50" in the last 2 digits of the serial number while the first memory card 21, the second memory card 34 and the fourth memory card 54 are formatted by the image pickup device 1 of "98" in the last 2 digits, an alert screen is displayed as shown in Fig. 17. By the alert screen on the monitor 64, a user is informed of a situation that the combination of cards is inappropriate so that the memory cards are inconsistent with each other. Consequently, the user will recognize that the image pickup device 1 can neither record nor reproduce an image. In addition, it is possible to allow a user to recognize an inconsistent memory card by a message on the alert display. For instance, the monitor 64 may display a message like "Card Combination: incorrect (card C)".

Fig. 18 shows an example of inverting two memory cards to be inserted into the second card slot 33 and the third card slot 43. In this example, case, the memory card having a directory of "98C_000l" is inserted into the second card slot 33, while the card having a directory of "988_0001" is inserted into the third card slot 43. Fig. 18 also shows an alert screen displayed on the monitor. With this alert screen displayed, a user will recognize that the image pickup device 1 cannot neither record nor reproduce the image data due to an inconsistency of the memory cards. In addition, it is possible to allow a user to recognize inconsistent memory cards by a message on the alert display. For instance, the monitor 64 may display a message like "Not Inserted Correctly: (card B, card C)".

The displaying of the alert screen is accompanied with respective directory names. Thus, a user can grasp which of the card slots the inconsistent card is fitted to. By making the alert screen contain the information about inconsistent memory card(s), it is possible to enhance the convenience of a user. Further, the image pickup device 1 may be constructed so as to display an alert screen representing that the device can neither record nor reproduce the image data. For instance, by alert-displaying the operations to be prohibited due to an inconsistency of the directory names or the numbers of files in the alert screen, it is possible to enhance the convenience of a user.

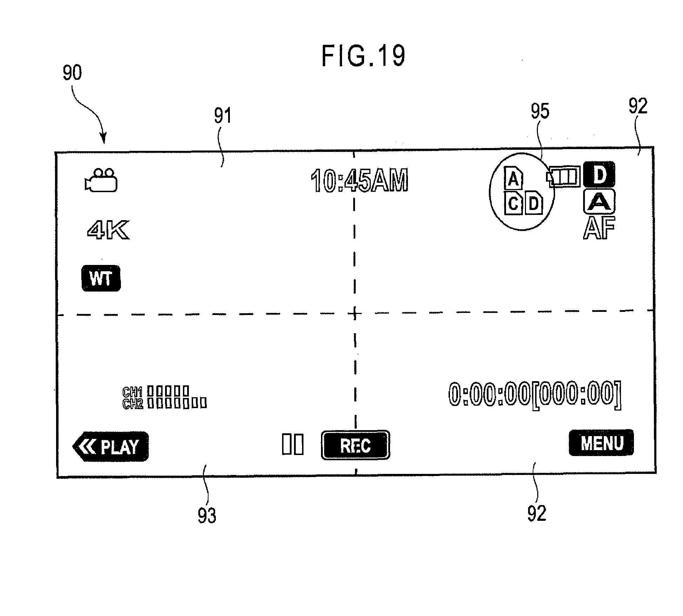

Further, through a display at the card icon display section 95, the image pickup device 1 may inform a user of an inconsistent memory card(s). For instance, after continuing to display an alert image for e.g. 5 seconds, a screen shown in Fig. 19 is displayed. If the second memory card 34 is inconsistent, then an icon B is displayed in a blinking manner, as shown in Fig. 19. Thus, by differentiating the displaying form of one icon corresponding to an inconsistent memory card from that of another icon corresponding to an consistent memory card, a user can recognize the inconsistent memory card with ease. As described above, the positional relationship of four icons coincides with the positional relationship of four card slots. That is, the positional relationship among the top-left icon A, the top-right icon B, the bottom-left icon C and the bottom-right icon D coincides with the positional relationship among the top-left, top-right, bottom-left and bottom-right card slots. With this arrangement, a user can grasp which of the memory cards is fitted into the card slot in the inconsistent condition. Since the image pickup device 1 is constructed so as to display the icons representing how four memory cards are fitted into the card slots, it enables a user to vanish the alert display from the display quickly. Viewing from the opposite side, even if the alert display vanishes with the elapse of a given period of time, a user can recognize the presence of a defective fitting condition through this icon display. Similarly, this alert displaying or icon blinking may be executed in the other "inconsistency" cases, for example, discordances in the directory name, the number of scenes, the card class. Consequently, it is possible to recognize a defective memory card(s) with ease.

In the above-mentioned file management, when the memory cards 24, 34, 44 and 54 are fitted into the card slots 23, 33, 43 and 53 respectively, the first main processor 21 receives the information about the directory names of the memory cards 24, 34, 44 and 54 and the numbers of files stored in these memory cards. Subsequently, if the directory names or the numbers of files are not consistent with each other, the main processor 21 executes the above alert displaying. In this stage, the main processors 31, 41 and 51 have not informed the main processor 21 of the file names of encoded files recorded in the memory cards 34, 44 and 54 yet. In the situation, when reproducing the files, deleting the files or selecting a scene(s) to be protected, the file names of encoded files recorded in the first memory card 24 are displayed in the form of a list. According to the user's selection of an objective scene from the list, the information representing what number scene has been selected from the top of the list is transmitted from the first main processor 21 to the other main processors 31, 41 and 51. Then, based on the order of the selected scene in the list, the main processors 31, 41 and 51 read out the file names of the corresponding encoded files recorded in the memory cards 34, 44 and 54 and further transmit the files names to the first main processor 21. On receipt of the information about the file names, the first main processor 21 judges whether four encoded files are consistent with each other or not. In case of consistency, for example, the reproducing operation is executed as per normal. In case of inconsistency, the alert display is performed after reproducing the encoded files for the predetermined period.

### (Flow of Reproducing)

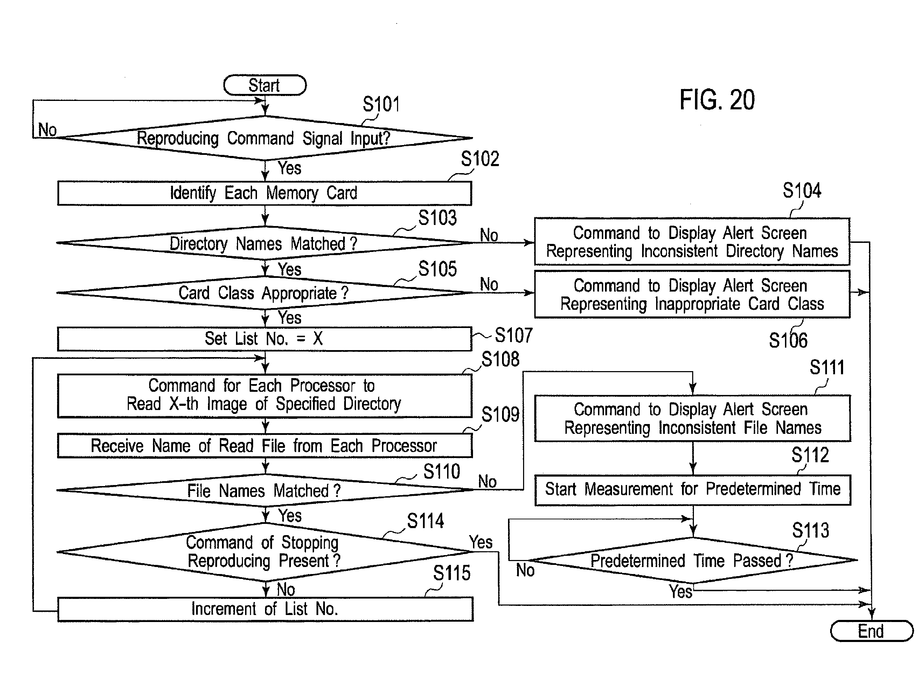

Next, the reproducing process performed when the numbers of files are equal to each other will be described with reference to Figs. 6 and 20. Fig. 20 is a flow chart showing the reproducing process. First, the command signal input unit 71 judges whether the reproducing command signal has been inputted or not (step S101). If a user pushes the reproducing (playback) button, then the input unit 15 outputs the reproducing command signal to the controller 21a (Yes at step S101). If the reproducing command signal is not inputted (No at step S101), the routine is held in its stand-by mode until the reproducing command signal is inputted. In this way, the reproducing command signal is transmitted from the input unit 15 to the command signal input unit 71 of the controller 21a.

Next, the memory card identifier 73 identifies the memory cards (step S102). First, the directory name identifier 74 transmits a memory card identifying command signal to judge whether the directory names in four memory cards are regularly created or not (step S103). For instance, each processor reads out a directory name from each memory card and further transmits the readout directory name as memory-card information to the memory card identifier 73. The memory card identifier 73 executes confirmation of the directory names, based on the memory-card information. That is, the memory card identifier 73 confirms whether the directory names created in the memory cards 24, 34, 44 and 54 meet predetermined conditions or not. Specifically, if both the serial numbers of respective memory cards and their sequential numbers are uniform respectively and the identification numbers of respective memory cards are "A", "B", "C" and "D" respectively, then it is judged that the directory names are consistent with the memory cards, respectively.

If the memory card identifier 73 judges that the directory names in four memory cards are not consistent with the memory cards respectively (No at step S103), then the memory card identifier 73 outputs an "inconsistency" signal to the alert screen display commander 77. Then, the alert screen display commander 77 outputs an alert-screen display command signal to the sub-processor 61 to instruct the monitor 64 to display the alert screen (step S104). Consequently, the monitor 64 displays the alert screen indicating that the directory names are not consistent with the memory cards respectively. Alternatively, as mentioned before, this alert warning may be replaced by a blinking icon of a memory card having a directory name inconsistent.

If the memory card identifier 73 judges that the directory names in four memory cards are consistent with the memory cards respectively (Yes at step S103), then the card class identifier 75 outputs the memory card identifying command signal to confirm whether respective card classes of four memory cards are appropriate or not (step S105). For instance, each processor reads out a card class from each memory card and further transmits the readout card class as the memory-card information to the memory card identifier 73. The memory card identifier 73 judges whether the readout card class is appropriate or not, based on the memory-card information. For example, in the ranking of card class, the memory card identifier 73 regards a card class more than "6" in grade as an appropriate card class.

If it is judged that the card class is not appropriate (No at step S105), then the memory card identifier 73 outputs the "inconsistency" signal to the alert screen display commander 77. Then, the alert screen display commander 77 outputs the alert-screen display command signal to the sub-processor 61 to instruct the monitor 64 to display the alert screen (step S106). Consequently, the monitor 64 displays the alert screen indicating that the card class is not appropriate.

If it is judged that the card class is appropriate (Yes at step S105), it is executed to set the list number to X (step S107). Note that the list number represents the order in the list, which is to be designated by a user. Suppose that for instance the encoded files named the sequential numbers "0002", "0004" and "0005" are recorded in the memory cards. If a user operates to reproduce an image whose corresponding files are named "0004", then X becomes "2" because the encoded files named "0004" corresponds to the second files in the list. In this way, the list number is determined based on both a sequential number in the file names of the encoded files recorded in the memory cards and a sequential number in common with the encoded files that a user wants to reproduce.

Next, the memory card identifier 73 outputs an "consistency" signal to the image reading commander 78. On receipt of the consistency signal, the image reading commander 78 outputs an image reading command signal to respective main processors to instruct each processor to read the X^{-th} image in the designated directory (step S108). In this way, an X^{-th} encoded file of an encode file counting from the smallest encoded file in the sequential number is loaded from a plurality of encoded files recorded in each memory card, so that the 4k image is reproduced. In addition, the file-name receiver 83 receives the file names of respective images (encoded files) that the main processors have read in (step S109). Then, the file-name consistency judgment unit 81 judges whether the file names are consistent with each other uniformly (step S110).

If the file names are inconsistent with each other (No at step S110), then the file-name consistency judgment unit 81 outputs the inconsistency signal to the alert screen display commander 77 and the timing measuring unit (Timer) 82. As a reference, such a situation that the file names are inconsistent with each other corresponds to a condition that one or more encoded files are deleted in at least one of the memory cards, as represented by Fig. 15. The alert screen display commander 77 outputs the alert-screen display command signal representing that the file names are inconsistent with each other to the sub-processor 61 to instruct the monitor 64 to display the alert screen (step S111). In addition, the timing measuring unit (Timer) 82 starts a measurement of a predetermined time (step S112).

It is executed to judge whether the predetermined time has passed (step S113). If the predetermined time has passed, then the routine is ended. Specifically, on receipt of the information that the predetermined time has passed from the timing measuring unit 82, the image-reading stop commander 84 outputs an image-reading stop command signal to each main processor. Consequently, with the passage of the predetermined time, the reading operation of images is stopped and furthermore, the reproducing operation of the 4k image is stopped. In this period, as the image in a different scene is reproduced in any area, a user can recognize that at least one memory card is not consistent with the other memory cards. For instance, an inconsistent image may be reproduced in the second area 92. With the above-mentioned operation, as a user can grasp an inconsistency of the file names through the monitor 64, it is possible to enhance the convenience of the user. The displaying of the alert screen may be performed before or after reproducing the images.

If the file names are consistent with each other (Yes at step S110), then the file-name consistency judgment unit 81 judges whether a reproducing stop instruction is present or not (step S114). If the reproducing stop instruction is present (Yes at step S114), the image-reading stop commander 84 outputs the image-reading stop command signal to each main processor and the routine is ended. That is, an interrupt processing to stop reading of an image is executed, so that the reproducing of 4k image is stopped. If the reproducing stop instruction is absent during reproducing the 4k image (No at step S114), the reproducing of 4k image is continued until the reproducing time. Subsequently, when reproducing a next scene, it is executed to increment the list number (step S115) and then, the routine goes back to step S108. Thereafter, the similar processing is executed to reproduce the 4k image in the next sequential number.

### (Flow of Recording)

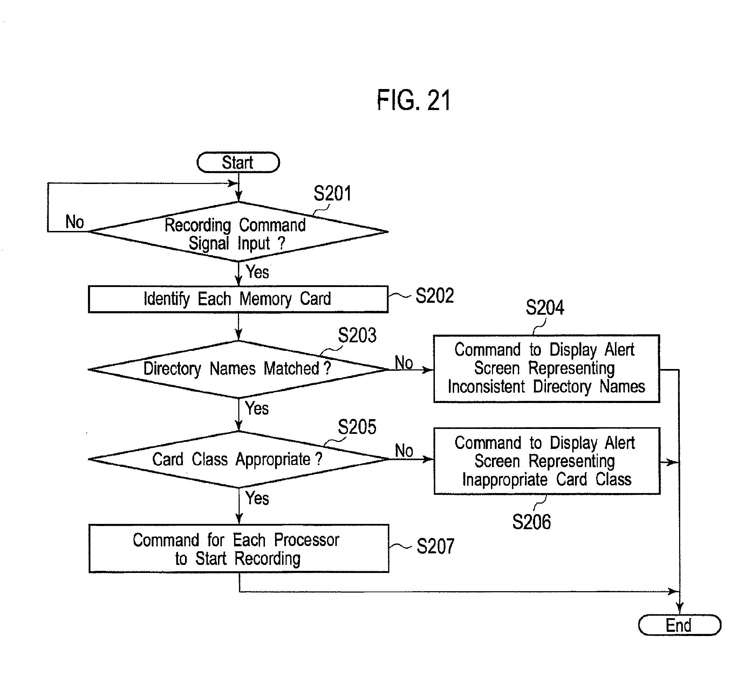

Next, the recording process will be described with reference to Figs. 6 and 21. Fig. 21 is a flow chart showing the recording process. First, the command signal input unit 71 judges whether the recording command signal has been inputted or not (step S201). If a user pushes the recording button, then the input unit 15 outputs the recording command signal to the controller 21a (Yes at step S201). If the recording command signal is not inputted (No at step S201), the routine is held until the recording command signal is inputted. In this way, the recording command signal is transmitted from the input unit 15 to the command signal input unit 71 of the controller 21a.

Next, the memory card identifier 73 identifies the memory cards (at step S202). First, the directory name identifier 74 transmits the memory card identifying command signal to judge whether the directory names in four memory cards are regularly created or not (step S203). For instance, each processor reads out the directory name from each memory card and further transmits the readout directory name as the memory-card information to the memory card identifier 73. The memory card identifier 73 executes confirmation of the directory names, based on the memory-card information. That is, the memory card identifier 73 confirms whether the directory names created in the memory cards 24, 34, 44 and 54 meet the predetermined conditions or not. Specifically, if both the serial numbers of respective memory cards and their sequential numbers are uniform respectively and the identification numbers of respective memory cards are "A", "B", "C" and "D" respectively, then it is judged that the directory names are consistent with the memory cards, respectively.

If the memory card identifier 73 judges that the directory names in four memory cards are not consistent with the memory cards respectively (No at step S203), then the memory card identifier 73 outputs the inconsistency signal to the alert screen display commander 77. Then, the alert screen display commander 77 outputs the alert-screen display command signal to the sub-processor 61 to instruct the monitor 64 to display the alert screen (step S204). Consequently, the monitor 64 displays the alert screen indicating that the directory names are not consistent with the memory cards respectively. Alternatively, as mentioned before, this alert warning may be replaced by a blinking icon of a memory card having an inconsistent directory name.

If the memory card identifier 73 judges that the directory names in four memory cards are consistent with the memory cards respectively (Yes at step S203), then the card class identifier 75 outputs the memory card identifying command signal to confirm whether respective card classes of four memory cards are appropriate or not (step S205). For instance, each processor reads out the card class from each memory card and further transmits the readout card class as the memory-card information to the memory card identifier 73. The memory card identifier 73 judges whether the readout card class is appropriate or not, based on the memory-card information. Here, for instance, the memory card identifier 73 regards the card class more than "6" in grade as the appropriate card class

If it is judged that the card class is not appropriate (No at step S205), then the memory card identifier 73 outputs the "inconsistency" signal to the alert screen display commander 77. Then, the alert screen display commander 77 outputs the alert-screen display command signal to the sub-processor 61 to instruct the monitor 64 to display the alert screen (step S206). Consequently, the monitor 64 displays the alert screen indicating that the card class is not appropriate.

If it is judged that the card class is appropriate (Yes at step S205), then the memory card identifier 73 outputs the consistency signal to the recording start commander 76. On receipt of the consistency signal, the recording start commander 76 outputs a recording start command signal to each main processor to instruct it to start recording of an image (step S207). Consequently, four main processors encode respective segmented images corresponding to the allocated areas and record the images in the form of encoded files. In this way, as it has been previously found that the numbers of files stored in the memory cards are consistent with each other, it is possible to execute a recording of images without confirming the file names.

The above-mentioned control operation will be summarized as follows. First, four memory cards are formatted in block, simultaneously. Then, at formatting, directories are created to store the encoded files for 4k image. These directories are named in accordance with a previously-established rule. The file management is executed on the assumption of using a plurality of memory cards. Specifically, when the directory names of four memory cards are not consistent with each other appropriately, the recording operation and the reproducing operation are together prohibited. The directory name contains a part of the manufacturer's serial number of the image pickup device and a card number (A to D). On the contrary, the recording operation is permitted under condition that the manufacturer's serial numbers of four memory cards are consistent with each other and additionally, corresponding to the card slots, respective card numbers (A to D) allocated to respective memory cards are contained in the directory names.

Concretely, the recording and reproducing operations are restrained in case of using a memory card formatted by the other image pickup device 1 or fitting a memory card into an inappropriate card slot. Similarly, when the numbers of files in four memory cards are not equal to each other, the recording and reproducing operations are restrained. In such a case, the monitor 64 displays an alert screen. When the names of files are not consistent with each other despite a consistency in the number of files in four memory card, the reproducing operation is restrained in part while the recording operation is not restrained. In case of reproducing, by designating encoded files to be loaded from four memory cards by the list number, it is judged whether the file names of the loaded files are consistent with each other. Then, if the file names are not consistent with each other, the loaded files are reproduced for a predetermined time (e.g. about 5 seconds) to impress the inconsistency on a user. With this management, it is possible to enhance the convenience of the user.

### (Icon Display Control)

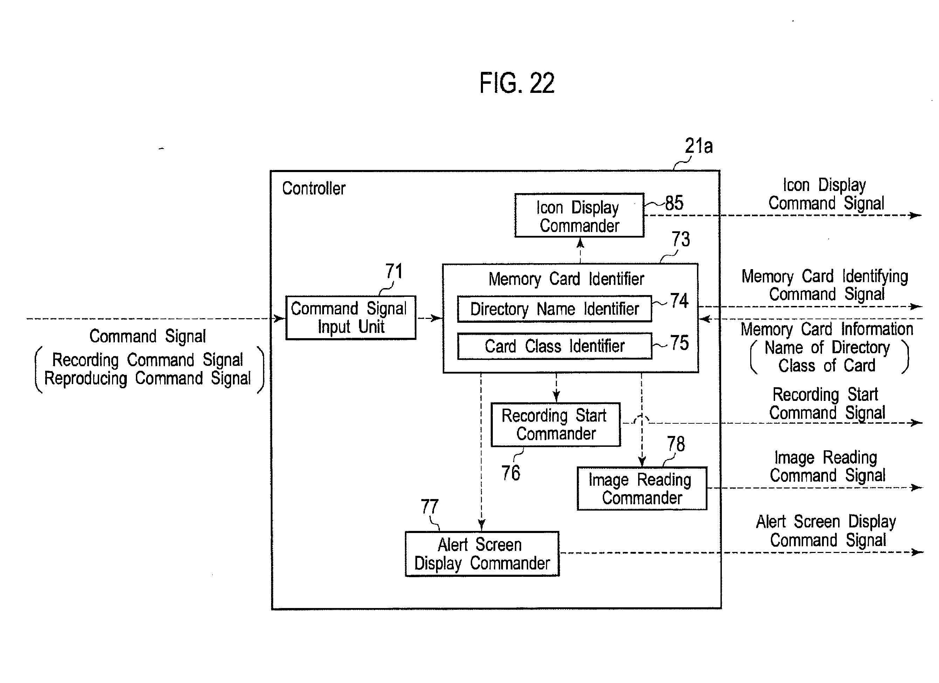

The display control for the card icon display section 95 will be described with reference to Fig. 22. Fig. 22 is a functional block diagram showing the constitution of the controller 21a. In Fig. 22, the constituents shown in Fig. 6 are partially eliminated for the sake of simplicity. The controller 21a is provided with an icon display commander 85. The memory card identifier 73 is adapted so as to confirm four memory cards and output the conformation result to the icon display commander 85. Then, the icon display commander 85 blinks an icon corresponding to the inconsistent memory card, as shown in Fig. 19. Of course, the blinking of an icon may be replaced by changing the color of an icon corresponding to the inconsistent memory card or overlapping a mark X etc. on the relevant icon. Consequently, even after the alert display is finished, a user can grasp the inconsistent memory card with ease.

In this way, the card icon display section 95 is arranged in a display screen image. Further, the display forms of the icons A to D are changed corresponding to the fitting condition of the memory cards into the card slots 23, 33, 43 and 53. Thus, the displaying of each icon A to D is switchable between its lighting state and the blinking state. In the card icon display section 95, the positional relationship among the icons A to D coincides with the positional relationship among the card slots 23, 33, 43 and 53. Here, the icon A corresponding to the first card slot 23 is displayed at the upper left of the card icon display section 95, the icon B corresponding to the second card slot 33 at the upper right, the icon C corresponding to the third card slot 43 at the lower left, and the icon D corresponding to the fourth card slot 53 is displayed at the lower right of the card icon display section 95. With the arrangement, a user can recognize which of the card slots no memory card is fitted to, with ease. Thus, the user can insert a memory card into a card slot having no memory card easily. For this end, the image pickup device 1 may be provided with detecting means for detecting the memory cards inserted into the card slots 23, 33, 43 and 53, respectively. The displaying of each icon may be changed based on the detection result of the detecting means. The detecting means may be constructed so as to detect the fitting condition of the memory cards electrically or physically. In addition, the alert displaying or icon blinking may be executed in the other "inconsistent" cases, for example, discordances in the directory name, the number of scenes, the card class. Consequently, it is possible to recognize a defective memory card(s) with ease.

### (Data Structure of Encoded File)

In dividing a 4k image into quarters for encoding, there is a case of overlapping respective areas partially. Then, by linearly-interpolating overlapped portions of data at decoding, a joint part at the boundary between two adjacent areas becomes visible with difficulty. Owing to the provision of an overlap portion, it is possible to improve the display quality of an image on display. In case of overlapping the areas partially, the information about the size of an overlapped portion is required at decoding. For instance, when taking an image in a different mode or by a different image pickup device 1, the size of an overlapping portion may change in comparison with that in the normal mode or by the original image pickup device 1. In such a case, the linear interpolation could be effected inappropriately when the 4k image is reproduced by the original image pickup device 1 or the external display unit 102. Therefore, according to the embodiment, an encoded file is formed so as to contain the positional information about the overlapping portion. The data structure of such an encoded file will be described below.

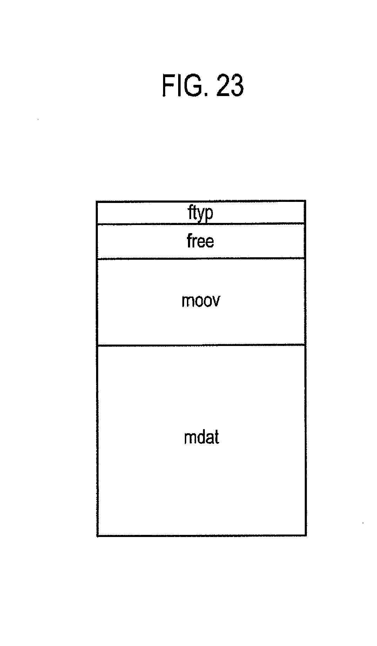

Fig. 23 is a view showing the data structure of an encoded file as an MP4 file typically. The encoded file includes an "ftyp" atom, an "free" atom, an "mdat" atom and an "moov" atom. The "ftyp" atom is header information. The "mdat" atom is stream data consisting of audio data and video data. The "moov" atom is management information of the "mdat" atom. The "free" atom can involve unique information inherent in each manufacture and is skipped by a player for reproduction. Although the insert position of the "free" atom is not restrictive particularly, it is positioned just behind the "ftyp" atom in this embodiment. In addition, the "free" atom is formed so as to include the overlap information. That is, the "free" atom containing the positional information is added to an MP4 file.

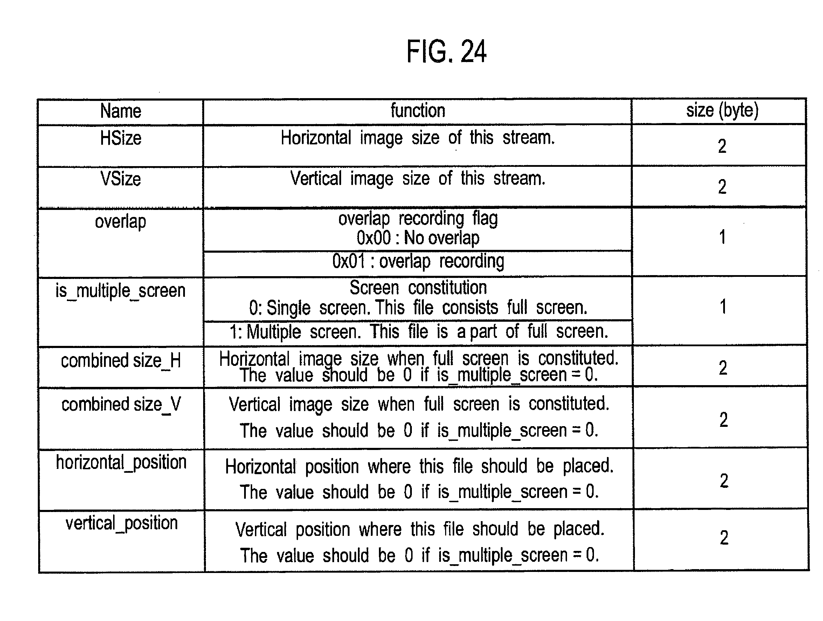

Fig. 24 is a table showing the overlap information. In the "free" atom, there are stored a horizontal screen size (HSize) and a vertical screen size (VSize). In dividing a 4k image, the horizontal screen size (Hsize) becomes a resolution (1920) of the image to be divided, while the vertical screen size (VSize) becomes a resolution (1080) of the segmented image after division. The vertical screen size (VSize) and the horizontal screen size (Hsize) consist of 2 bytes of data, respectively.

The "free" atom contains overlap information (overlap), multi-screen information (is_mutiple_screen), a horizontal combined size (combined size_H), a vertical combined size (combined size_V), a horizontal position (horizontal_position) and a vertical position (vertical_position). These constituents are stored as the positional information for specifying the position of each segmented image in the overall image. The overlap information (overlap) is a flag to represent the presence or absence of an overlap. Based on a value of the overlap information, it is judged whether the division is in an overlap mode where the image is divided so that adjoining segmented screens overlap each other or a non-overlap mode where the image is divided so that adjoining segmented screens do not overlap at all.

The multi-screen information (is_mutiple_screen) is a flag to represent the imaging mode. Based on a value of the multi-screen information, it is judged whether the imaging operation is in a high-resolution mode to record a 4k image or in a normal mode to record an HD image. The multi-screen information (is_mutiple_screen) is screen structure information representing the presence or absence of segmented images. In other words, based on the multi-screen information, it can be recognized whether the stream data of each encoded file corresponds to a part of the overall screen of the 4k image or the overall HD image. The horizontal position (horizontal_position) and the vertical position (vertical_position) represent the size of a combined image. In the high-resolution mode (4k image) with no overlap, the horizontal image size becomes 3840 pixels, while the vertical image size becomes 2160 pixels. Note that in the normal mode (HD image), the horizontal combined size (combined size_H) and the vertical combined size (combined size_V) become "0" respectively since a plurality of segmented images are not combined.

The horizontal position (horizontal_position) and the vertical position (vertical_position) represent horizontal and vertical positions of a segmented image in the combined image. In case of an HD image, the horizontal position (horizontal_position) and the vertical position (vertical_position) become "0" respectively since a plurality of segmented images are not combined. The horizontal combined size (combined size_H), the vertical combined size (combined size_V), the horizontal position (horizontal_position) and the vertical position (vertical_position) consist of 2 bytes of data, respectively.

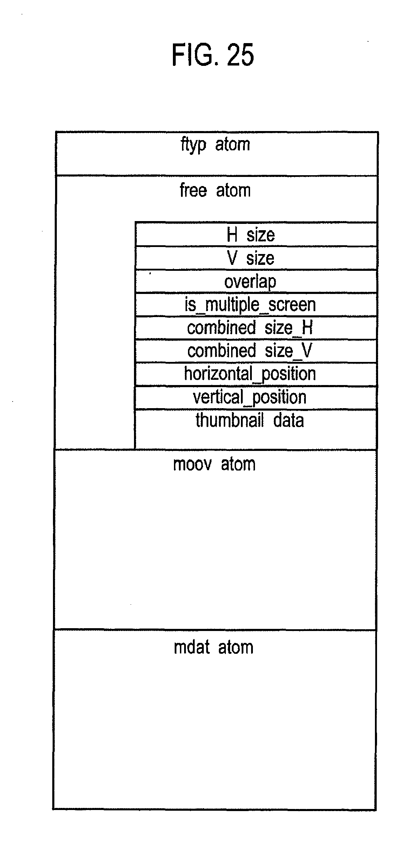

Fig. 25 is a view showing data contained in the free atom typically. In the free atom, there are stored the horizontal position (H size), the vertical position (V size), the overlap information (overlap), the multi-screen information (is_mutiple_screen), the horizontal combined size (combined size_H), the vertical combined size (combined size_V), the horizontal position (horizontal_position) and the vertical position (vertical_position). In addition, data of a thumbnail image of the overall image (thumbnail data) is also stored in the free atom. The size of the thumbnail image is 32k bytes. The creation of a thumbnail image will be described later.

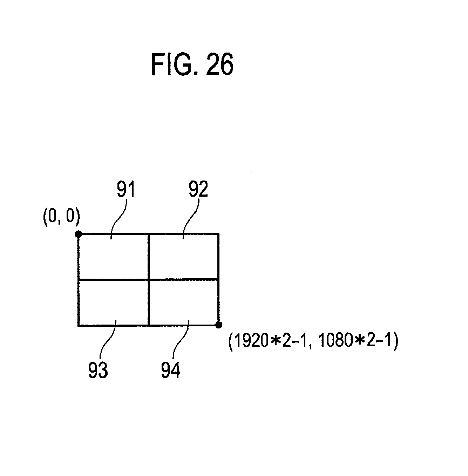

Note that as shown in Fig. 26, the horizontal position and the vertical position are defined by an orthogonal coordinate system where the top-left coordinate of the overall image is represented by (0, 0) while the bottom-right coordinate of the overall image is represented by (1920×2-1, 1080×2-1). In Fig. 25, the horizontal position (horizontal position) and the vertical position (vertical position) show the coordinates of each upper-left corner of the first to fourth areas 91 to 94.

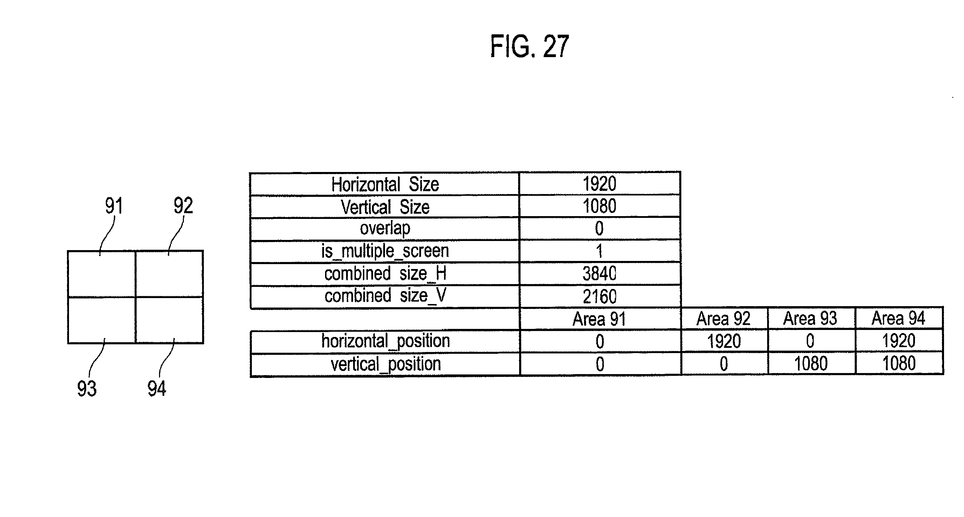

Next, the positional information when recording the 4k image in the non-overlap mode will be described. Fig. 27 is a table showing the positional information stored in the encoded files corresponding to the first to fourth areas 91 to 94. In common with four encoded files, the horizontal screen size (Horizontal Size) is 1920, the vertical screen size (Vertical Size) of 1080, the overlap information (overlap) of "0" representing the non-overlap mode, the multi-screen information (is_multiple_screen) of "1" representing the high-resolution mode, the horizontal combined size (combined size H) of 3840, and the vertical combined size (combined size V) is 2160. As for the horizontal position (horizontal position) and the vertical position (vertical position), four encoded files are different from each other. For instance, in the encoded file corresponding to the first area 91, the horizontal position (horizontal position) and the vertical position (vertical position) are together "0", which may be represented by a coordinate point of (0, 0). Similarly, in the other encoded files corresponding to the second to fourth areas 92 to 94, the horizontal positions (horizontal position) and the vertical positions (vertical position) are (1920, 0), (0, 1080) and (1920, 1080), respectively.

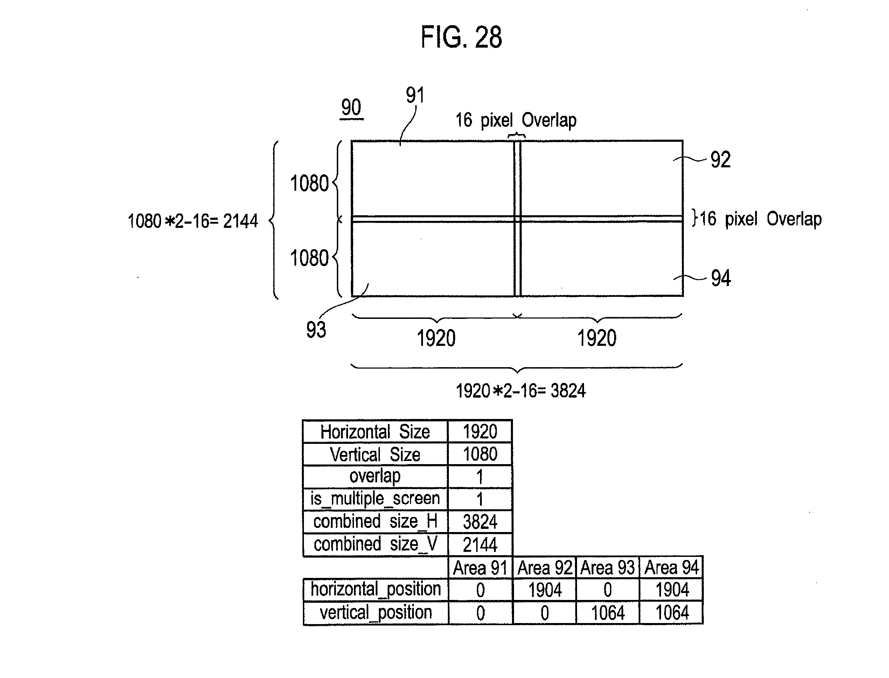

Next, the arrangement of overlapping two adjoining areas each other by 16 pixels will be described with reference to Fig. 28. In this case, the horizontal combined size (combined size H) becomes 3824 (= 1920×2-16), while the vertical combined size (combined size V) becomes 2144 (= 1080×2-16). In common with four encoded files, the horizontal screen size (Horizontal Size) is 1920, the vertical screen size (Vertical Size) of 1080, the overlap information (overlap) of "1" representing the overlap mode, and the multi-screen information (is_multiple_screen) is "1" representing the high-resolution mode.

As for the horizontal position (horizontal position) and the vertical position (vertical position), four encoded files are different from each other. For instance, in the encoded file corresponding to the first area 91, the horizontal position (horizontal position) and the vertical position (vertical position) are represented by (0, 0). Similarly, in the other encoded files corresponding to the second to fourth areas 92 to 94, the horizontal positions (horizontal position) and the vertical positions (vertical position) are (1904, 0), (0, 1064) and (1940, 1064), respectively.

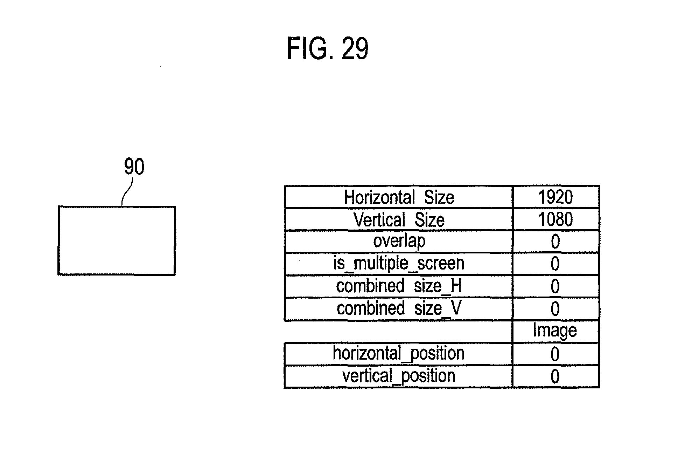

Next, the recording operation in the normal mode will be described with reference to Fig. 29. In this case, an HD image is recorded in the first memory card 24 only, and the second memory card 34, the third memory card 44 and the fourth memory card 54 are not used respectively. The horizontal screen size (Horizontal Size) recorded in the first memory card 24 becomes 1920, the vertical screen size (Vertical Size) of 1080, and the multi-screen information (is_multiple_screen) becomes "0" representing the normal mode. In the normal mode, the overlap information (overlap), the horizontal combined size (combined size_H), the vertical combined size (combined size_V), the horizontal position (horizontal position) and the vertical position (vertical position) become "0" respectively since these characteristics are unnecessary.

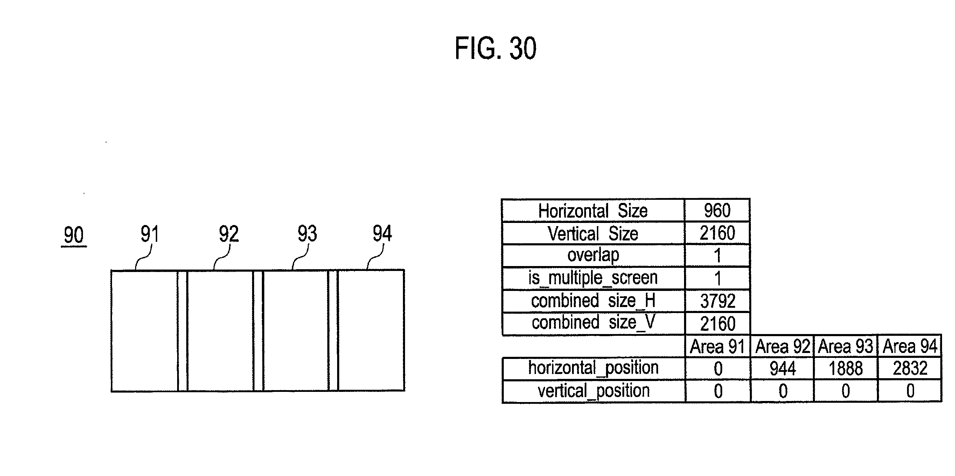

In place of dividing the whole image horizontally and vertically, it may be divided as shown in Fig. 30. In the example shown in Fig. 30, the whole image is divided so as to juxtapose the first to fourth areas 91 to 94 in the horizontal direction. Thus, the first to fourth areas 91 to 94 are reed-shaped in the vertical direction. The adjoining areas are arranged so as to overlap each other by 16 pixels. As the areas 91 to 94 are arranged to line up sideways, they do not overlap with other in the vertical direction. The horizontal combined size (combined size_H) becomes 3792 (= 960×4-16×3) while the vertical combined size (combined size_V) is 2160. In common with four encoded files, the horizontal screen size (Horizontal Size) is 960, the vertical screen size (Vertical Size) of 2160, the overlap information (overlap) of "1" representing the overlap mode, and the multi-screen information (is_multiple_screen) is "1" representing the high-resolution mode.

As for the horizontal position (horizontal position) and the vertical position (vertical position), four encoded files are different from each other. For instance, in the encoded file corresponding to the first area 91, the horizontal position (horizontal position) and the vertical position (vertical position) are represented by (0, 0). Similarly, in the other encoded files corresponding to the second to fourth areas 92 to 94, the horizontal positions (horizontal position) and the vertical positions (vertical position) are (944, 0), (1888, 0) and (2832, 0), respectively.

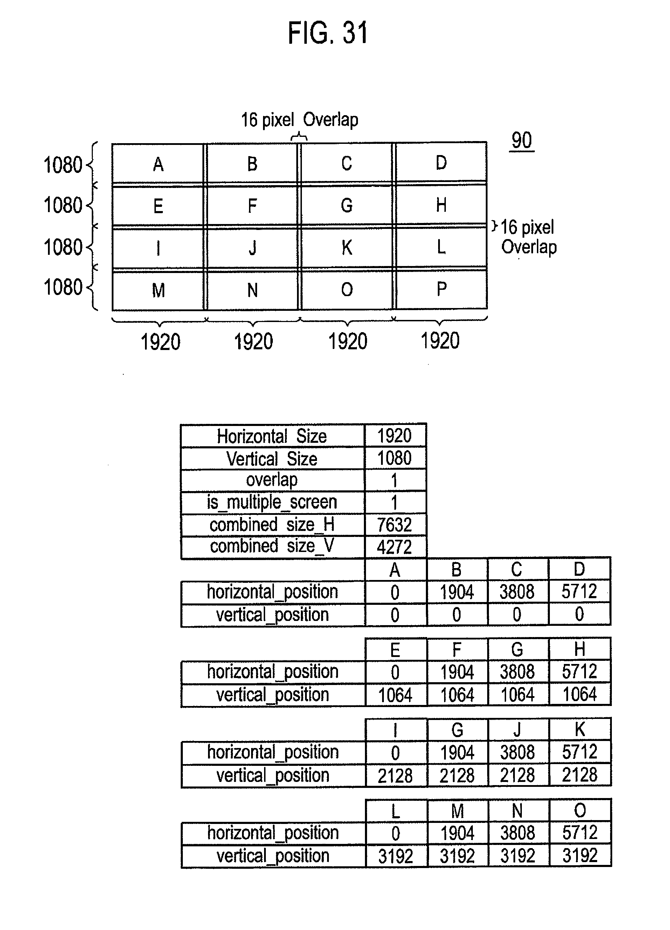

In addition, the division number may be set to four or more. In Fig. 31, the overall image is divided into sixteen pieces from four-by-four vertically and horizontally. Thus, it becomes possible to record an 8K4K image whose size is 4 times as large as the size of a 4K2k image. In the example of Fig. 31, alphabets A to P are assigned to sixteen areas for their discrimination. Correspondingly, sixteen memory cards are prepared. Alternatively, the number of required memory cards may be reduced by recording two or more encoded files in one memory card. Suppose that for instance the horizontal screen size (Horizontal Size) of each encoded file is 1920, the vertical screen size (Vertical Size) of 1080, and the adjoining areas are arranged so as to overlap each other by 16 pixels. Then, the overlap information (overlap) becomes "1" representing the overlap mode, while the multi-screen information (is_multiple_screen) becomes "1" representing the high-resolution mode. The horizontal combined size (combined size_H) becomes 7632 (= 1920×4-16×3) while the vertical combined size (combined size_V) becomes 4272 (= 1080×4-16×3).

As for the horizontal position (horizontal position) and the vertical position (vertical position), sixteen encoded files are different from each other. For instance, in the encoded file corresponding to the area A, the horizontal position (horizontal position) and the vertical position (vertical position) are represented by (0, 0). Similarly, in the other encoded files corresponding to the areas B to P, the horizontal positions (horizontal position) and the vertical positions (vertical position) are (1904, 0), (3808, 0), (5712, 0), (0, 1064), (1904, 1064), (3808, 1064), (5712, 1064), (0, 2128), (1904, 2128), (3808, 2128), (5712, 2128), (0, 3192), (1904, 3192), (3808, 3192) and (5712, 3192), respectively.

In this way, by incorporating the positional information into the encoded files, it is possible to allow the image pickup device 1 to deal with various high-resolution imageries. For instance, even when changing the size of the overlap area, the size of the whole image or the size of the segmented image, the image can be reproduced appropriately. In addition, since the positional information is included in the free atom, the image can be processed simply and quickly. For instance, when formulating an encoded file, the first main processor 21 inserts the positional information into the free atom.

At reproducing, the sub-processor 61 reads out this positional information. Corresponding to the positional information, segmented images are combined. If the segmented images are overlapping each other, the interpolation processing is applied to the overlapped portion. With this interpolation processing, it is possible to improve the quality of displaying. Note that the segmented images of respective encoded files do not have to be identical to each other in size. For example, as shown in Fig. 28, a left half of the overall image 90 may be divided up and down while dividing the right half into right and left as shown in Fig. 30.

Note that the positional information contains respective coordinates of the segmented images in the overall image and the sizes of the segmented images. The positional information also contains the overlap information (overlap) of "1" representing the overlap mode and the multi-screen information (is_multiple_screen). Therefore, it is possible to specify the position of respective segmented images in the whole image. As a result, the image can be reproduced in even the external display unit 100 appropriately.

### (Creation of Thumbnail Image)

As mentioned above, the 4k image is encoded in size of 1920×1080 by respective processors, creating encoded files (MP4 files). Thus, only a quarter of the stream is written in each memory card. According to this embodiment, a thumbnail image is stored in the encoded file recorded in the 4k mode. The thumbnail image is a still image of the post-synthetic whole image. For instance, one frame of the whole image constitutes the thumbnail image. With this creation, it is possible for a user to grasp which of the scenes has been recorded in the encoded file, with ease. The creating operation of the thumbnail image will be described below.

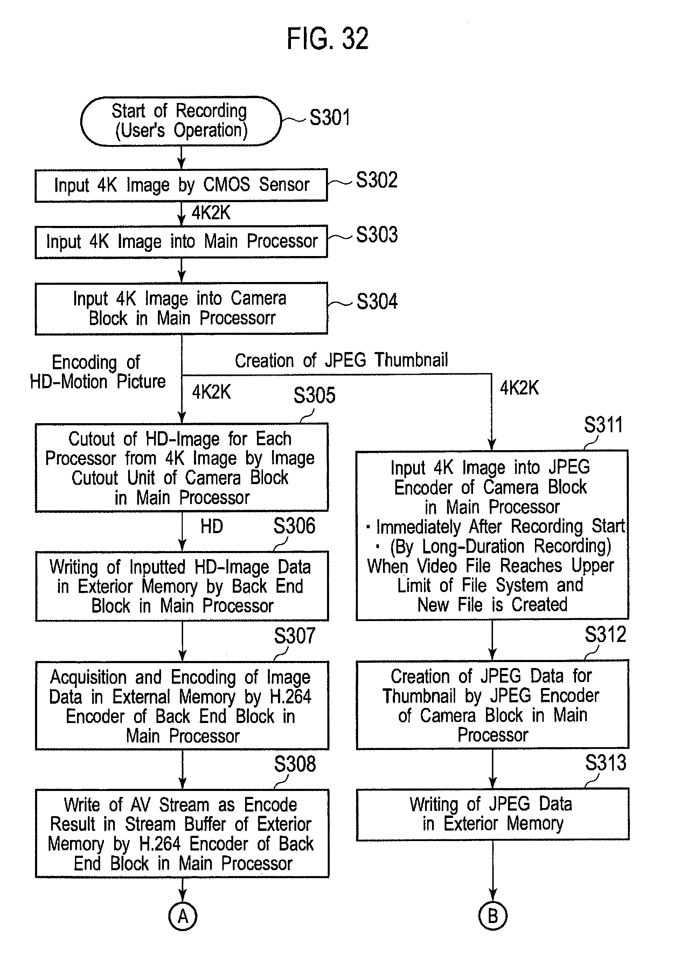

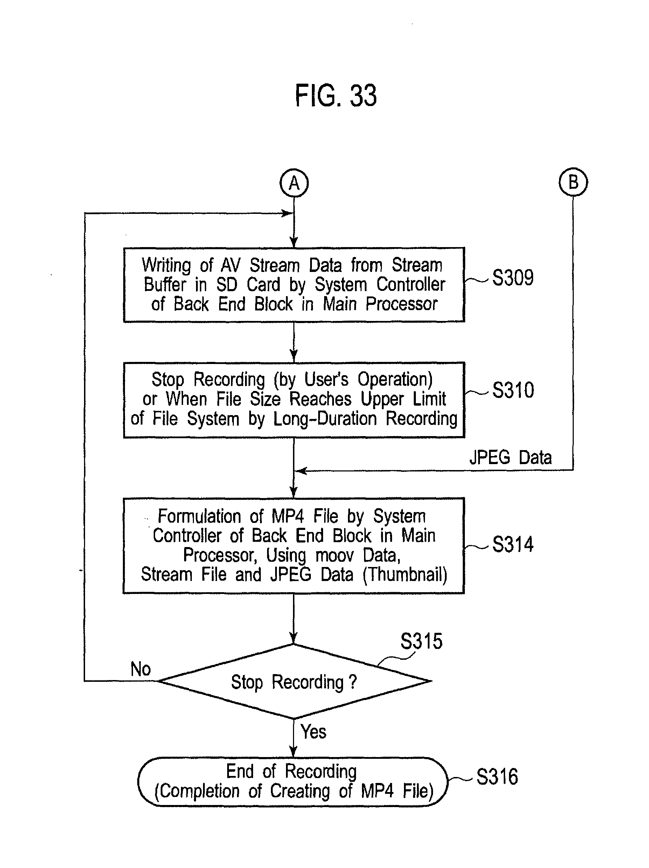

Figs. 32 and 33 illustrate a flow chart to explain the encoding of an image and the creation of a thumbnail image. Note that the flow chart (part) of Fig. 33 follows the flow chart (part) of Fig. 32. When receiving a user's operation to start recording (step S301), the image sensor 12 (CMOS sensor) inputs a 4k image (step S302). Then, the 4k image is inputted to the main processors 21, 31, 41 and 51 (step S303). Image data of the overall image 90 (before division) is inputted to the main processors 21, 31, 41 and 51. The 4k image is inputted to respective camera blocks of the main processors 21, 31, 41 and 51 (step S304). The camera block is provided with the camera controller 27 (Fig. 4), a later-mentioned image cutout unit, a JPEG encoder, etc. Although Fig. 4 does not show, the main processors 31, 41 and 51 are also provided with camera controllers each similar to that of the main processor 21.

First, the encoding operation of an HD image will be described. The processes at steps S303 to S310 are executed by four main processors 21, 31, 41 and 51 in a similar way. Thus, the operations of the main processors 31, 41 and 51 are eliminated appropriately. The operation of the main processor 21 will be explained representatively. In the camera block, the image cutout unit cuts an HD image for each processor from the 4k image (step S305). Next, in the main processor 21, its backend block writes out the inputted HD image to the first memory 22 as an external memory (step S306). Note that the backend block is provided with the system controller 28, an H264. encoder and so on.

The H.264 encoder in the backend block takes out the image data from the first memory 22 and encodes it (step S307). Next, the H.264 encoder writes an AV stream as the encode result into a stream buffer of the first memory 22 (step S308). Then, the system controller 28 of the backend block reads out the AV stream data from the stream buffer and write the same data in the first memory card 24 (step S309). Thereafter, when receiving a command of stopping recording through a user's operation or when the file size reaches an upper limit of the system file as a result of long-duration recording (step S310), the routine goes to step S314 to build up the MP4 file. Note that the upper limit of the system file represents a maximum file size (e.g. 4G bytes) that the image pickup device 1 can record data in the form of a single encoded file. As such long-duration recording may cause the file size of the encoded file to exceed the upper limit of the file system, the encoded file is recorded in the form of another encoded file.

Next, the creating operation of a thumbnail image will be described. Here, a thumbnail image in JPEG format is created. For instance, the thumbnail image may be 160×96 pixels in size. In creating the thumbnail image, only the main processor 21 takes charge of its creation. The other main processors 31, 41 and 51 do not execute the creating operation of the thumbnail image.

First, the 4k image is inputted to a JPEG encoder of the camera block in the first main processor 21 (step S311). It is noted that the timing of creating a thumbnail image may be determined arbitrarily. In this embodiment, however, the thumbnail image is created immediately after starting the recording of motion pictures or when creating a new file since the image file reaches the upper limit of the file system as a result of long-duration recording, as shown below. That is, the thumbnail file is created at the timing of creating a new encoded file. Consequently, an overall image at the initial timing of a dynamic picture image constitutes the thumbnail image.

The JPEG encoder of the camera block in the first main processor 21 creates JPEG data for thumbnail (step S312). That is, the thumbnail image is created by encoding the 4k image (before encoding) in JPEG format. By creating the thumbnail image based on one frame of image data of the 4k image (before encoding), it is possible to simplify the creating operation. Then, the camera block writes the JPEG data in the first memory 22 as an external memory (step S313).

The encoding operation in JPEG format (step S311 to step S313) is executed simultaneously with the encoding operation of an HD image (step S305 to step S309). For instance, the encoding operation of an HD image is executed in parallel with the process of creating a thumbnail image from the overall image at the timing of pushing the recording start button. Consequently, it is possible to create an appropriate thumbnail image. Then, at step S314, the system controller 28 of the camera block in the first main processor 21 builds up the MD4 file with use of the moov data, the stream file and the JPEG data (thumbnail image). Consequently, the MP4 file is recorded in the first memory card 24, in the form of an encoded file.

Next, it is judged whether the stop of recording due to a user's operation is accepted or not (step S315). If the stop of recording due to the user's operation is accepted (Yes at step S315), the recording operation is ended (step S316). If the stop of recording is not accepted (No at step S315), in other words, if the file size has reached the upper limit, then the routine returns to step S309 to continue the recording operation. In this way, as the thumbnail image is created and added to the encoded file, a user can confirm the thumbnail image with ease. Note that as mentioned above, the thumbnail image has 32k bytes in size and is stored in free atom, as shown in Fig. 25.

In this way, only the first main processor 21 creates the thumbnail image. With the above operation, it is possible to reduce respective throughputs at the second main processor 31, the third main processor 41 and the fourth main processor 51. Thus, it is possible to prevent the capacities of the second memory 32, the third memory 42 and the fourth memory 52 from getting increased. Of course, if the capacities of the second memory 32, the third memory 42 and the fourth memory 52 are sufficiently large, the image pickup device 1 may be constructed so as to store the thumbnail image of the overall image in these memory cards 24, 34, 44 and 54.

In addition, as mentioned above, the first main processor 21 carries out the file management through the file number stored in the memory card. Thus, the file management can be easily effected since the thumbnail image is stored in the encoded file of the first memory card 24. For instance, the sub-processor 61 does not have to execute a synthetic process to create a thumbnail image. Further, when displaying the list of recorded scenes, the first main processor 21 reads the thumbnail image of the encoded files recorded in the first memory card 24 and display the same image. Consequently, at the stage of displaying the list of recorded scenes, there is no need of reading the encoded files recorded in the second memory card 34, the third memory card 44 and the fourth memory card 54. Subsequently, at the stage that a specific operation (e.g. reproducing, deleting, protection, etc.) has been completed through the input unit 15 operated by a user on confirmation of the list, the sub-processor 61 has only to read the encoded files recorded in the second memory card 34, the third memory card 44 and the fourth memory card 54. Therefore, as the image pickup device 1 eliminates the need for reading the encoded files point by point, the operation can be simplified. It is possible to enhance the convenience of a user and also possible to suppress an unnecessary operation.

Note that the present invention is not limited to the above-mentioned embodiment only, and therefore the invention may be appropriately modified without any departure from the purpose of the invention. In addition, the above-mentioned operations could be realized by a computer program stored in a ROM in the main processor or the like. In the above-mentioned example, the program including a group of commands allowing a computer (processors) to execute respective operations can be stored in a variety of non-transitory computer readable media and supplied to the computer. The non-transitory computer readable media contain a variety of tangible storage media. As the examples of the non-transitory computer readable media, there are magnetic recording media (e.g. flexible disc, magnetic tape, hard-disc drive), magneto-optical medium (e.g. magnetic optical disc), CD-ROM (Read Only Memory), CD-R, CD-R/W and semiconductor memories (e.g. mask ROM, PROM (Programmable ROM), EPROM (Erasable ROM), flash ROM, RAM (Random Access Memory)). Moreover, the program may be supplied to the computer through a variety of transitory computer readable media. As the examples of the transitory computer readable media, there are electrical signals, optical signals and electromagnetic waves. The transitory computer readable media can supply a computer with the program through a wired communication channel (e.g. wire, optical fiber) or a wireless communication channel.

## Claims

1. An image pickup device (1) comprising:
imaging means (12) configured to take an image; and
a plurality of processors (21, 31, 41, 51) configured to encode segmented images obtained by dividing the image taken by the imaging means (12), the plurality of processor (21, 31, 41, 51) having at least a first processor (21), wherein
the plurality of processors (21, 31, 41, 51) are configured to record encoded files obtained by encoding the segmented images, in a plurality of recording media (24, 34 44, 54) corresponding to the plurality of processors (21, 31, 41, 51), and
the first processor (21) is configured to create the encoded file so as to contain a thumbnail image of the image.

2. The image pickup device of claim 1, wherein
the thumbnail image is created in parallel with an encoding of the segmented images.

3. The image pickup device of claim 1 or 2, wherein
the image from the imaging means (12) is inputted to each of the processors,
each of the processors (21, 31, 41, 51) cuts out the corresponding segmented image from the image and also encodes the segmented image, and
the thumbnail image is a still image created based on the image before being encoded.

4. The image pickup device of any one of claims 1 to 3, further comprising a reproducing processor (61) configured to synthesize the segmented images in reproducing the image with use of the encoded files recorded in the plurality of recording media (24, 34 44, 54), wherein
the plurality of processors (21, 31, 41, 51) read the encoded files recorded in the corresponding recording media (24, 34 44, 54) and encode the encoded files to the segmented images, and
the reproducing processor (61) synthesizes the segmented images decoded by the plurality of processors (21, 31, 41, 51).

5. The image pickup device of claim 1, wherein
the image is divided into at least four segmented images,
the plurality of processors are at least four processors (21, 31, 41, 51), and
the plurality of recording media are at least four recording media (24, 34 44, 54).

6. A method of controlling an image pickup device (1) having imaging means (12) configured to take an image and a plurality of processors (21, 31, 41, 51) configured to encode segmented images obtained by dividing the image taken by the imaging means (12), the method comprising the steps of:
allowing the plurality of processors (21, 31, 41, 51) to encode the segmented images thereby creating encoded files, respectively;
allowing a first processor (21) of the plurality of processors (21, 31, 41, 51) to create a thumbnail image of the image; and
allowing the first processor (21) to create the encoded file so as to contain the thumbnail image when recording the encoded files in a plurality of recording media (24, 34 44, 54) corresponding to the plurality of processors (21, 31, 41, 51).

7. A control program for an image pickup device (1) having imaging means (12) configured to take an image and a plurality of processors (21, 31, 41, 51) configured to encode segmented images obtained by dividing the image taken by the imaging means (12), the control program allowing the processors (21, 31, 41, 51) to execute the steps of:
allowing the plurality of processors (21, 31, 41, 51) to encode the segmented images thereby creating encoded files, respectively;
allowing a first processor (21) of the plurality of processors (21, 31, 41, 51) to create a thumbnail image of the image; and
allowing the first processor (21) to create the encoded file so as to contain the thumbnail image when recording the encoded files in a plurality of recording media (24, 34 44, 54) corresponding to the plurality of processors (21, 31, 41, 51).
